# EUROPÄISCHE PATENTSCHRIFT

(11) **EP 3 915 770 B1**
(45) Veröffentlichungstag und Bekanntmachung des Hinweises auf die Patenterteilung: **13.11.2024**
(21) Anmeldenummer: 21165496.7
(22) Anmeldetag: 29.03.2021
(51) Int. Cl.: B30B 9/30, B65F 1/14, B65F 3/04

(54) **HUB-KIPP-VORRICHTUNG, DAMIT AUSGESTATTETE BALLENPRESSE SOWIE VERFAHREN ZU IHREM BETRIEB**
LIFTING.TILTING DEVICE, BALER EQUIPPED THEREWITH AND METHOD FOR ITS OPERATION
DISPOSITIF ÉLÉVATEUR-CULBUTEUR, PRESSE À BALLES ÉQUIPÉE D'UN TEL DISPOSITIF, AINSI QUE SON PROCÉDÉ DE FONCTIONNEMENT

(30) Priorität: 28.05.2020 DE 102020114354
(43) Veröffentlichungstag der Anmeldung: 01.12.2021
(73) Patentinhaber: Schwelling, Hermann, 88682 Salem (DE)
(72) Erfinder: Schwelling, Hermann, 88682 Salem (DE)
(74) Vertreter: Weickmann & Weickmann PartmbB

(56) Entgegenhaltungen:
- AT-B- 384 799
- CN-A- 110 697 299
- DE-A1- 10 251 516
- DE-A1- 102012 105 461
- DE-A1- 2 750 479
- US-A- 4 538 951
- US-A- 4 934 896
- US-A- 4 941 796
- US-B1- 6 210 094

## Beschreibung

### I. Anwendungsgebiet

Die Erfindung betrifft eine Hub-Kipp-Vorrichtung, mit der oben offene Behälter hochgehoben und durch Kippen, meist in eine hoch liegende Einfüllöffnung hinein, entleert werden können.

### II. Technischer Hintergrund

Ein typischer Anwendungsfall hierfür sind Ballenpressen, in die über eine solche Einfüllöffnung als Befüllöffnung zu verpressende Materialien, beispielsweise Verpackungs-Materialien wie Kartonagen, Folien oder flachgedrückte Getränke-Behälter, eingebracht werden müssen zur möglichst automatisierten Beschickung einer solchen Ballenpresse.

Zu diesem Zweck werden häufig Hub-Kipp-Vorrichtungen benutzt, in die ein oben offener, mit den entsprechenden zu verpressenden Materialien gefüllter, Sammelwagen eingefahren wird, der danach mittels dieser Hub-Kipp-Vorrichtung zunächst auf die Höhe der Befüllöffnung gebracht wird und durch Kippen in die Befüllöffnung hinein entleert wird. Die Befüllöffnung befindet sich in aller Regel oberhalb des Presskastens der Ballenpresse, und damit - je nach deren Größe - auf oder über Kopfhöhe.

Dabei gibt es auf das Problem, dass die zur Verfügung stehende Raumhöhe oberhalb der Befüllöffnung begrenzt ist, und damit während des entleeren der Sammelwagen von der Befüllöffnung aus möglichst wenig weiter nach oben aufragenden soll.

Aus diesem Grund sind Hub-Kipp-Vorrichtungen bekannt, bei denen der Sammelwagen am freien Ende eines um eine horizontale Achse schwenkbaren Schwenkarmes mittels einer Befestigungsvorrichtung befestigt ist, wobei ein bestimmter Bewegungsweg der Befestigungsvorrichtung und damit des Sammelwagens bei dessen Entleerung dadurch erreicht wird, dass entweder der Schwenkarm mehrteilig ausgebildet ist, insbesondere ein 4-Gelenk umfasst.

Eine Führung der Befestigungsvorrichtung mittels einer Kulissenführung ist ebenfalls bekannt, aber nicht mittels eines Schwenkarmes.

Ferner existiert das Problem, dass der für das Heranfahren und Einsetzen des Sammelwagens in die Befestigungsvorrichtung der Hub-Kipp-Vorrichtung notwendige Grundfläche neben der eigentlichen Ballenpresse möglichst klein sein soll, um den insgesamt benötigten Platz für den Betrieb der Ballenpresse gering zu halten.

Bei den Ballenpressen ist zu unterscheiden zwischen so genannten Kasten-Ballenpressen und Kanal-Ballenpressen.

Bei den Kasten-Ballenpressen wird das Pressgut von einem Pressstempel - der meist vertikal beweglich ist - gegen den Boden des Presskastens verpresst, dessen Entnahmeöffnung, die sich in einer der vertikalen Seitenwände des Presskastens befindet, im Betrieb von einer Entnahmetür verschlossen ist, die zum Entnehmen des fertig gestellten Ballens geöffnet wird.

Bei den Kanal-Ballenpressen ist der Pressstempel meist horizontal beweglich und verpresst das Pressgut in dem Presskasten, wobei er es auf der dem Pressstempel gegenüberliegenden Seite aus dem Presskasten hinaus in einen anschließenden Presskanal schiebt, der an seinem offenen Ende, der Entnahmeöffnung, ständig offen ist, jedoch aufgrund einer Verjüngung seines Querschnitts im Endbereich dem hindurchgeschobenen Pressstrang einen ausreichenden Widerstand entgegengesetzt, der zum Pressen genügt. Abschnittsweise wird der entstehende Pressstrang im Presskanal durch Umreifen mit einem Bindematerial wie Draht oder Kunststoffbändern in Ballen unterteilt, die dann nach dem Verlassen der Entnahmeöffnung abtransportiert werden können.

In beiden Fällen befindet sich die Einfüllöffnung in aller Regel auf der Oberseite des Presskanals, bei vertikalen Kasten-Ballenpressen teilweise auch im oberen Bereich einer der vertikalen Seitenwände des Presskastens.

Kleinere vertikal wirkende Kasten-Ballenpressen werden häufig bei geringem Aufkommen von Pressgut eingesetzt.

Häufig erfolgt das Befüllen und Entleeren bei den kleineren Kasten-Ballenpressen von der Frontseite der Ballenpresse her, indem in deren Frontwand im oberen Bereich eine verschließbare Befüllöffnung vorhanden ist, durch die manuell das lose Pressgut - beispielsweise leere Kartons oder leere Kunststoff-Flaschen oder Getränke-Dosen - in den Presskasten eingefüllt wird, wenn sich der Pressstempel in der nach oben zurückgezogenen Ausgangsstellung, nämlich oberhalb der Befüllöffnung, befindet.

Um den manuellen Aufwand für das Befüllen zu reduzieren und auch um den Durchsatz einer solchen Kasten-Ballenpresse zu erhöhen, ist es bekannt, diese automatisch zu befüllen, indem ein Förderband darauf abgelegtes loses Pressgut zur Befüllöffnung transportiert und durch diese hindurch in den Presskasten hinein abwirft, wenn sich der Pressstempel in seiner darüber befindlichen Ausgangsstellung befindet. Dabei verläuft das Förderband meist schräg von unten nach oben zur Befüllöffnung ansteigend, damit das lose Füllgut bequem auf das tief liegende Ende des Förderbandes aufgelegt werden kann.

Da eine solche automatische Befüll-Vorrichtung beim Entleeren der Kasten-Ballenpresse im Weg wäre, wenn sich dabei die Befüllöffnung und somit auch die Befüll-Vorrichtung weiterhin an der Frontseite der Ballenpresse befinden, ist in diesen Fällen die Befüllöffnung in aller Regel in der der Frontseite gegenüberliegenden Heckseite angeordnet.

Allerdings benötigt ein solches Förderband viel Stellfläche zusätzlich zum Rest der Vertikal-Kasten-Ballenpresse, deren prinzipieller Vorteil ja gerade darin besteht, sehr wenig Stellfläche zu benötigen, wodurch deren Hauptvorteil verloren geht. Zusätzlich kann eine damit ausgestattete vertikal wirkende Kasten-Ballenpresse auch nicht mehr in einem geringen Abstand vor einer Wand aufgestellt werden.

Hinzu kommt ferner, dass häufig - insbesondere bei Kartonagen oder leeren Getränkebehältern als Pressgut - das Pressgut entfernt von der Ballenpresse in oben offenen Sammelwägen gesammelt wird, und die gefüllten Sammelwägen dann zur Ballenpresse geschoben werden. Dann soll der Sammelwagen möglichst vollständig in die Ballenpresse hinein entleert werden können, um den leeren Sammelwagen sofort wieder zur Verfügung zu haben.

Das Pressgut fällt an der Ballenpresse also chargenweise an.

Das Dokument CN 110 697 299 A offenbart eine Hub-Kipp-Vorrichtung gemäss dem Oberbegriff des Anspruchs 1 mit Schwenkarmen, an welchen ein Sammelwagen befestigt werden kann, und mit einer Kippvorrichtung zum Kippen des Sammelwagens, welche eine Kulissenführung umfasst vermittels welcher der Sammelwagen derart kippbar ist, dass der Sammelwagen mit seiner im abgestellten Zustand oberen Öffnung nach unten weist und sich dadurch schwerkraftbedingt entleert. Ferner sei auf die Dokumente US 4 538 951 A, US 6 210 094 B1, DE 10 2012 105461 A1 und DE 102 51 516 A1 hingewiesen.

### III. Darstellung der Erfindung

### a) Technische Aufgabe

Es ist daher die Aufgabe gemäß der Erfindung, eine Hub-Kipp-Vorrichtung sowie eine damit ausgestattete Ballenpresse zur Verfügung zu stellen, bei der der oben offene Behälter, beispielsweise ein Sammelwagen, beim Entleeren möglichst wenig weit nach oben über die Einfüllöffnung oder Befüllöffnung vorsteht, und die möglichst einfach und funktionssicher sowie kostengünstig aufgebaut ist sowie hinsichtlich der Ballenpresse eine möglichst geringe Aufstellfläche erfordert.

### b) Lösung der Aufgabe

Diese Aufgabe wird durch die Merkmale der Ansprüche 1, 7 und 18 gelöst. Vorteilhafte Ausführungsformen ergeben sich aus den Unteransprüchen.

Hinsichtlich der Hub-Kipp-Vorrichtung, mit der ein Behälter wie beispielsweise ein gefüllter, oben offener Sammelwagen in eine hochliegende Einfüllöffnung hinein entleert werden soll, umfasst diese gattungsgemäß neben dem Grundgestell einen Schwenkarm, der schwenkbar um eine, in der Regel horizontal liegende, Arm-Achse am Grundgestell befestigt ist und als Hub-Vorrichtung dient, sowie eine Kipp-Vorrichtung zum Kippen des Sammelwagens. Um diesen an dem Schwenkarm bzw. der Kipp-Vorrichtung zu befestigen, ist eine entsprechende Befestigungs-Vorrichtung vorhanden.

Erfindunasaemäß weist dabei die Kipp-Vorrichtung ein Kipp-Teil auf, welches um eine Kipp-Achse schwenkbar, also kippbar, am abseits von dessen Arm-Achse des Schwenkarmes befestigt ist, in der Regel am freien Ende des Schwenkarmes. An diesem Kipp-Teil ist auch die Befestigungs-Vorrichtung für den Sammelwagen fixiert, insbesondere drehfest fixiert.

Auf diese Art und Weise kann der Schwenkarm sehr einfach und stabil gestaltet werden, da er zwischen seiner Arm-Achse und der im freien Endbereich befestigten Kipp-Teil kein Gelenk aufweisen muss.

Die Kipp-Vorrichtung umfasst ferner eine Kulissen-Führung, mit der der KippVorgang durchgeführt wird:
Das in der Führungsbahn der Kulissen-Führung, meist einer Führungsnut, geführte Element, meist ein Nutenstein oder eine Nutenrolle, ist am Kipp-Teil befestigt, und zwar abseits von dessen Kipp-Achse.

Dadurch wird beim Hochschwenken des Schwenkarmes, wodurch die Befestigungs-Vorrichtung und ggfs. ein daran befestigter Sammelwagen auf Höhe der Einfüllöffnung gebracht wird, abhängig vom Verlauf der Führungsbahn das Kipp-Teil und damit der Sammelwagen gekippt, bis dieser mit seiner im abgestellten Zustand oberen Öffnung nach unten weist und sich dadurch schwerkraft-bedingt entleert.

Durch den Verlauf der Führungsbahn wird also festgelegt, ab welchem Zeitpunkt und wie schnell das Kippen der Befestigungs-Vorrichtung und damit des Sammelwagens vor sich geht, sodass sich durch Wechseln des Bauteiles, in dem sich die Führungsbahn befindet, eine einfache Anpassung an andere Gegebenheiten, beispielsweise Höhe der Unterkante der Einfüllöffnung und ähnliches, erzielen lässt.

Dabei ist vorzugsweise der untere Teil der Führungsbahn, insbesondere der untere Anfangsbereich der Führungsbahn, ein Kreisbogen um die Arm-Achse, während die Führungsbahn im oberen Bereich eine deutlich stärkere Krümmung, also einen geringeren Krümmungsradius, aufweist, wobei die Krümmung der Führungsbahn in ihrem mittleren Bereich am stärksten ist. Im oberen Endbereich verläuft die Führungsbahn dagegen fast gerade und horizontal Vorzugsweise verlaufen die Arm-Achse des Schwenkarmes und die Kipp-Achse des Kipp-Teiles parallel zueinander, insbesondere horizontal. Insgesamt könnte man die Form der Führungsnut als Bumerang-förmig bezeichnen.

Vorzugsweise verläuft die Arm-Achse und/oder die Kipp-Achse lotrecht zur Führungsebene, in der die Führungsbahn verläuft.

Dadurch ist eine funktionssichere und einfache Gestaltung der Hub-Kipp-Vorrichtung möglich, bei der die Steuerung der Hub-Bewegung als auch der Kipp-Bewegung primär mechanisch abläuft, und keine elektronischen Bauteile erfordert.

Erfindungsgemäß umfasst die Vorrichtung nur einen Schwenkarm. Vorzugsweise kann dessen Schwenkebene, in der er verschwenkt wird, meist nur geringfügig von der Befestigungsvorrichtung beabstandet sein, sodass beides gemeinsam in einer Baugruppe aufgenommen sein kann.

Der Schwenkarm ist vorzugsweise zwischen einem oberen und einem unteren Endanschlag verschwenkbar, die ebenfalls Teil der Steuerung sind, da sie rein mechanisch den Bewegungsweg des Schwenkarmes begrenzen.

Vorzugsweise weist der Schwenkarm in der unteren Endlage, also anliegend am unteren Anschlag, von der Arm-Achse aus schräg nach unten und in der oberen Endlage, also anliegend am oberen Endanschlag, schräg nach oben.

Vorzugsweise wird der Schwenkarm verschwenkt mit Hilfe eines abseits der Arm-Achse befestigten Hydraulikzylinders als Schwenk-Antrieb, der mit dem anderen Ende an einem balkenförmigen Lagerbock, der von der Armachse abragt, ebenfalls abseits der Armachse befestigt ist. Damit steht ein langlebiger und kraftvoller Schwenk-Antrieb zu geringen Kosten zur Verfügung.

Eine gattungsgemäße Ballenpresse zum Verpressen von insbesondere Verpackungsmaterialien zu Ballen, an der eine solche Hub-Kipp-Vorrichtung eingesetzt werden kann, umfasst einen Presskasten mit einem Boden und davon - meist von dessen Umfangskanten - nach oben, meist vertikal, aufragenden Seitenwänden, die den Presskasten bilden, und einem im Presskasten verfahrbaren Pressstempel, der meist mittels eines oder mehrerer parallel wirkender, meist hydraulisch betriebener, Press-Zylinder mit großer Kraft bewegt werden kann.

Der Querschnitt des Presskastens lotrecht zur Bewegungsrichtung des Presstempels ist dabei meist annähernd rechteckig, so dass es vier in der Aufsicht betrachtet im Viereck zueinander angeordnete Seitenwände gibt, die meist aneinander angrenzen, also den Presskasten in horizontaler Umfangsrichtung durchgängig umgeben.

Es sind jedoch auch andere Formen von horizontalen Querschnitten des Presskastens möglich, beispielsweise ein runder Querschnitt mit der Folge, dass dann eine einzige zylindrische Seitenwand vorhanden ist, was jedoch von der hier verwendeten Erwähnung von mehreren Seitenwänden mit umfasst sein soll.

Im Falle einer vertikal wirkenden Kasten-Ballenpresse bewegt sich der Presstempel auf und ab und verpresst gegen den Boden des Presskastens. Häufig verlaufen die Seitenwände dabei nicht immer exakt parallel zueinander, sondern können einen von hinten nach vorne, zu Entnahmeöffnung hin, leicht zunehmenden Abstand zueinander einnehmen, um das Entnehmen des fertigen Ballens zu erleichtern.

Eine der Seitenwände, die als Frontwand bezeichnet wird, ist meist als vollständig zu öffnende Entnahmetür zum Entnehmen des fertig hergestellten Ballens ausgebildet, und in deren oberen Teil, insbesondere deren oberer Hälfte, ist eine durch eine Befüllklappe verschließbare, frontseitige Befüllöffnung vorhanden.

Die Oberkante der Befüllöffnung befindet sich in aller Regel unterhalb des in seine obere Endlage, die Ausgangsstellung, zurückgezogenen Pressstempels, auch wenn sich die Befüllöffnung in einer anderen Wand als der als Entnahmetür ausgebildeten Frontwand des Presskastens befinden sollte.

Falls eine automatische - also zumindest motorisch betriebene und manuell oder mittels einer Steuerung angesteuerte - Befüllvorrichtung vorhanden ist, befindet sich die Befüllöffnung meist nicht in der Frontwand, sondern in einer der anderen Seitenwände, meist in der der Frontwand gegenüberliegenden Rückwand.

Mittels einer solchen automatischen Befüllvorrichtung wird das darauf oder darin abgelegte lose Pressgut nicht nur bis zur Befüllöffnung transportiert, sondern auch durch diese hindurch in den Presskasten hinein befördert, und hierfür gegebenenfalls durch die Befüllöffnung hindurch geschoben von der automatischen Befüllvorrichtung.

Erfindungsgemäß wird bei einer solchen Ballenpresse, insbesondere einer vertikal wirkenden Kasten-Ballenpresse, die bestehende Aufgabe dadurch gelöst, dass diese eine Befüllvorrichtung umfasst mit einer Hub-Kipp-Vorrichtung, die wie zuvor beschrieben ausgebildet ist.

Vorzugsweise ist die Hub-Kipp-Vorrichtung insbesondere deren Lagerbock, dabei an der Außenseite der Ballenpresse verschraubt, was eine einfache Montage und Demontage der gesamten Hub-Kipp-Vorrichtung und sogar deren Nachrüstung ermöglicht.

Vorzugsweise weist die Hub-Kipp-Vorrichtung nur einen Schwenkarm auf, und dieser ist auf der von der Bedienerseite abgewandten Anti-Bedienerseite der Ballenpresse befestigt. Von der Schwenkebene aus ragt die Befestigungsvorrichtung vom Schwenkarm in Richtung Bedienerseite ab.

### (Volumen Vorratsbehälter:)

Insbesondere umfasst diese automatische Befüllvorrichtung einen Vorratsbehälter als Pufferspeicher zur Aufnahme von losem Pressgut, dessen Volumen - bei variablem Volumen dessen maximales Volumen - zum Aufnehmen einer vollständigen Charge - deren maximales Volumen vorgegeben ist - von, insbesondere losem, Pressgut ausreicht. Das vorgegebene Chargen-Volumen ist dabei meist das Volumen eines Sammelwagens, in dem das lose Pressgut am Ort seines Anfalls gesammelt wird.

Dies hat den Vorteil, dass der gesamte Inhalt an losem Pressgut eines gefüllten Sammelwagens auf einmal und damit sehr Zeit sparend automatisch in diese automatische Befüllvorrichtung, nämlich den Vorratsbehälter, entleert werden kann.

Hierfür besitzt der Vorratsbehälter vorzugsweise eine Einfüllöffnung, insbesondere im oberen Bereich des Vorratsbehälters, so dass das lose Pressgut schwerkraftbedingt von oben in den Vorratsbehälter hinein fallen kann. Insbesondere ist eine solche Einfüllöffnung in der Oberseite des Vorratsbehälters ausgebildet, wobei als einfachste Lösung die Oberseite als Einfüllöffnung vollständig offen sein kann.

Gerade durch eine solche großflächige Einfüllöffnung ist das Beschicken des Vorratsbehälters sehr leicht und schnell möglich.

Damit das lose Pressgut möglichst einfach vom dem Vorratsbehälter zur Befüllöffnung des Presskastens verbracht werden kann, steht der Vorratsbehälter mit der Befüllöffnung in Verbindung oder ist zumindest mit dieser in Verbindung bringbar.

Dies erfordert nicht zwingend einen Kontakt zwischen dem Vorratsbehälter und der Befüllöffnung, sondern lediglich, dass der Vorratsbehälter und insbesondere seine Abgabeöffnung in Richtung Befüllöffnung sich in einer eng benachbarten Lage zur Befüllöffnung befindet oder verbracht werden kann.

Der Boden des Vorratsbehälters befindet sich auf der Höhe der Unterkante der Befüllöffnung oder etwas darüber und reicht nahe an diese heran auf mindestens 2 cm oder mindestens 1 cm oder gar in die Befüllöffnung hinein.

Dadurch kann das Pressgut entlang des Bodens des Vorratsbehälters in die Befüllöffnung hinein geschoben werden.

### (Hub-Kipp-Vorrichtung: )

Die Hub-Kipp-Vorrichtung ist so ausgelegt, dass zum Entleeren der Sammelwagen nur so wenig weit wie nötig nach oben angehoben wird, obwohl er durch das Umkippen über die Einfüllöffnung weit nach oben ragt, und häufig nur eine begrenzte freie Höhe am Einsatzort dieser Ballenpresse zur Verfügung steht.

Manuell muss der gefüllte Sammelwagen nur noch in Kontakt mit der Befestigungsvorrichtung der Hub-Kipp-Vorrichtung gebracht werden, und falls dies keine automatische Verrastung bewirkt, manuell an dieser fixiert werden.

Vorzugsweise überwacht dabei ein Sensor, ob an der Befestigungsvorrichtung und damit der Kippvorrichtung ein Sammelbehälter vorhanden und/oder korrekt befestigt ist.

### (Vorratsschieber:)

Um das Pressgut vom Vorratsbehälter in die Befüllöffnung der Kasten-Presse zu transportieren, weist der Vorratsbehälter vorzugsweise einen angetriebenen Vorratsschieber auf, der auf die Befüllöffnung zu und von dieser weg bewegbar ist zwischen zwei Endlagen, um auch dies nicht manuell durchführen zu müssen.

In der einen Endlage verschließt der Vorratsschieber die Befüllöffnung des Presskastens und seine Frontfläche ist dann Bestandteil der Innenfläche des Presskastens ist und/oder der Vorratsschieber ist Bestandteil derjenigen Seitenwand, in der sich die Befüllöffnung befindet. Dadurch wird die Anzahl an Bauteilen und das Gewicht der Ballenpresse gering gehalten.

In der anderen Endlage befindet sich der Vorratsschieber an dem von der Befüllöffnung abgewandten Ende des Vorratsbehälters, um dazwischen loses Pressgut einfüllen zu können.

Dabei kann der Vorratsschieber entweder im Vorratsbehälter hin und her verfahrbar sein oder die von der Befüllöffnung abgewandte Stirnwand des Vorratsbehälters ist selbst der Vorratsschieber und kann sich in Querrichtung zur Befüllöffnung bewegen. Dies hält die Anzahl der Bauteile gering.

Vorzugsweise sind dann die Seitenwände längenveränderbar ausgebildet, insbesondere mehrteilig ausgebildet, insbesondere teleskopierbar ausgebildet, jedoch können sie auch starre, einteilige Seitenwände sein, die dann bei einem Bewegen der Stirnwand in Richtung Befüllöffnung nach wie vor weit von der Rückseite der eigentlichen Ballenpresse abstreben.

Der Vorratsschieber wird meist mittels, vorzugsweise in seiner Bewegungsrichtung verlaufenden, beidseitigen Schieberzylindern oder eines anderen Schieber-Antriebes verfahren.

Eine besonders raumsparende Anordnung ergibt sich, wenn diese Schieberzylinder entlang der Außenseiten des Vorratsbehälters verlaufen und insbesondere auch entlang der Außenseiten der Querwände des Presskastens, da sie dann in aller Regel in keiner ihrer möglichen Stellungen weiter vorstehen als der Vorratsbehälter selbst.

Vorzugsweise sind sie dabei als Zugzylinder ausgebildet, also insbesondere in die Einfahr-Richtung des Kolbens in den Zylinder hinein mit Druck beaufschlagbar ausgebildet.

### (Deckelklappe:)

Damit beim Vorwärtsschieben des losen Pressgutes im Vorratsbehälter in Richtung Befüllöffnung das lose Pressgut sich nicht nach oben über die obere Einfüllöffnung des Vorratsbehälter hinauf aufgetürmt, weist der Vorratsbehälter eine Deckelklappe auf, die zwischen einer die Einfüllöffnung oder insbesondere die ganze offene Oberseite des Vorratsbehälters verschließenden Schließstellung und einer diese nicht verschließenden, insbesondere vollständig offen lassenden, Offenstellung verlagerbar ist, insbesondere verschwenkbar ist, sodass in dieser Offenstellung die Einfüllöffnung für das Einfüllen von losem Pressgut zur Verfügung steht.

In der Schließstellung sollte die Unterseite der Deckelklappe parallel zum Boden des Vorratsbehälters verlaufen, um einen in der Höhe gleich bleibenden Kanal zu schaffen, den der Vorratsschieber in jeder seiner Funktionsstellungen in der Höhe im Wesentlichen ausfüllt.

Die Deckelklappe kann an ihrem freien, also von ihrer Schwenkachse abgewandten, Ende auch eine Kröpfung oder andere Halteelemente aufweisen, die in Richtung des Inneren des Vorratsbehälters gerichtet sind, um ein Hinausschieben von Pressgut über die Hinterkante des Vorratsbehälters beim Absenken der Deckelklappe zu vermeiden.

Der Vorratsschieber sollte natürlich den durch den geschlossenen Vorratsbehälter entstehenden Kanal in Richtung Befüllöffnung auch in der Breite in allen seinen Funktionsstellungen jeweils weitestgehend ausfüllen.

### (Führungsklappe:)

Alternativ dazu kann der Vorratsbehälter eine Führungsklappe umfassen, die mit ihrer Unterseite als Leitfläche für das lose Pressgut zur Befüllöffnung hin dient.

Zu diesem Zweck ist sie zwischen einer schräg zum Boden über der Einfüllöffnung des Vorratsbehälters stehenden Führungsstellung, in der sich die Unterseite der Führungsklappe in Richtung Befüllöffnung dem Boden des Vorratsbehälters annähert, und einer diese nicht überlappenden Offenstellung verlagerbar, insbesondere verschwenkbar.

Dadurch liegt der Vorratsschieber mit seiner Oberkante nicht an der Unterseite der Klappe an oder reicht nahe bis an diese heran, jedoch muss auch keine wesentliche Kraft zum Niederdrücken der Klappe wie bei einer Deckelklappe aufgebracht werden. Stattdessen schiebt der Vorratsschieber das lose Pressgut entlang des Bodens in Richtung Befüllöffnung, wobei sich das Pressgut über die Oberkante des Vorratsschiebers hoch türmen kann, begrenzt nur durch die Unterseite der Führungsklappe.

Durch Zurückfahren und erneutes Vorfahren des Vorratsschiebers kann in mehreren Hüben dennoch eine erhebliche Menge an losem Pressgut in den Presskasten eingebracht werden.

Dabei empfiehlt sich das Vorsehen einer von der Oberkante des Vorratsschiebers in die von der Befüllöffnung weg weisende Richtung erstreckenden Abdeckelementes, um ein Hineinfallen von Pressgut hinter den Vorratsschieber, also auf der von der Befüllöffnung abgewandten Seite, zu verhindern.

Zumindest in der Führungsstellung sind dann vorzugsweise Seitenbleche vorhanden, die in der Führungsstellung den Freiraum zwischen den Seitenkanten der Führungsklappe und dem Rand der Einfüllöffnung des Vorratsbehälters verschließen, um das seitliche Austreten oder Überstehen von Pressgut zu vermeiden.

### (Schrägfahrt:)

Um die Bauhöhe der Befüllvorrichtung möglichst gering zu halten und zu diesem Zweck deren Einfüllöffnung möglichst niedrig zu positionieren, kann der Boden des Vorratsbehälters, zumindest ab dem Ende des Bodenbereiches, der sich unterhalb der Einfüllöffnung befindet, vorzugsweise über seine gesamte Länge, schräg nach oben ansteigend ausgebildet sein.

Dennoch ist der Boden vorzugsweise als ebene Fläche ausgebildet und zur Befüllöffnung hin, insbesondere zu deren Unterkante hin, ansteigend, damit der Vorratsschieber in einer linearen Schiebebewegung entlang des Bodens bewegt werden kann und dabei immer den gleichen, geringen Abstand zum Boden einhalten kann oder den Boden gar berühren kann. Hierfür verläuft die Vorschubrichtung des Vorratsschiebers parallel zum Boden des Vorratsbehälters.

Dennoch ist hierbei vorzugsweise die Frontseite des Vorratsschiebers parallel zur Innenfläche derjenigen Seitenwand angeordnet ist, in der sich die Befüllöffnung befindet, damit der Vorratsschieber in seiner Endstellung, in der er sich in der Befüllöffnung befindet, Teil der entsprechenden Seitenwand des Presskastens ist und seine Innenfläche mit der Innenfläche der entsprechenden Seitenwand fluchten kann.

### (Vorratsbehälter anhebbar:)

Alternativ dazu kann der Vorratsbehälter in der Höhe verlagerbar am Presskasten befestigt sein und bis zu einer oberen Position, in der die Presskasten-seitige Kante des Bodens mit der Unterkante der Befüllöffnung in einer Seitenwand, insbesondere der Rückwand, des Presskastens fluchtet oder etwas höher liegt, anhebbar sein.

Beim Hineinkippen des Sammelwagens befindet sich der Vorratsbehälter dann in einer abgesenkten, niedrigen Lage knapp über dem Boden, so dass der fast auf dem Kopf stehende Sammelwagen nicht sehr weit in die Höhe ragt, wenn er in den Vorratsbehälter hinein entleert wird.

### (Getrennte Antriebe:)

Häufig werden nicht nur der mindestens eine Pressstempel, sondern auch die bewegten Teile der automatischen Befüllvorrichtung, also insbesondere der Vorratsschieber und/oder die Deckelklappe und/oder die Kippvorrichtung oder Hub-Kipp-Vorrichtung und/oder gegebenenfalls der anhebbare Boden und/oder der insgesamt anhebbare Vorratsbehälter, mittels Arbeitszylindern, insbesondere Hydraulikzylindern, betätigt.

Die Arbeitszylinder der automatischen Befüllvorrichtung, insbesondere deren Schieberzylinder, können mit dem gleichen Arbeitsmedium betrieben werden wie der oder die den mit mindestens einem Pressstempel betätigenden Presszylinder, und auch von der gleichen Druckmittel-Quelle mit Druckmedium versorgt werden.

Vorzugsweise sollen die Befüllvorrichtung und der Pressstempel jedoch unabhängig voneinander, insbesondere teilweise zeitlich überlappend, betätigbar sein und zu diesem Zweck sind vorzugsweise zwei getrennte und/oder getrennt ansteuerbare Antriebe für den wenigstens einen Pressstempel einerseits und zumindest ein oder einige bewegliche Teile der Befüllvorrichtung andererseits vorhanden, insbesondere zwei unabhängig voneinander ansteuerbare Hydraulikpumpen

Hinsichtlich des Betriebs-Verfahrens zum Betreiben einer Ballenpresse, insbesondere einer vertikal wirkenden Kasten-Ballenpresse, wie bisher beschrieben, wird diese Aufgabe dadurch gelöst, dass das an sich bekannte automatische Befüllen der Ballenpresse bzw. deren Presskasten chargenweise durchgeführt wird.

Dadurch kann bei chargenweisem Anfall von losem Pressgut mit sehr geringem Personalaufwand gearbeitet werden, indem das lose Pressgut automatisch durch die Befüllöffnung in den Presskasten hinein gedrückt, insbesondere hinein geschoben, wird, bis sich die gesamte Charge an Pressgut im Inneren des Presskastens befindet.

### (mittels Deckelklappe oder Führungsklappe:)

Bevorzugt wird dabei das lose Pressgut vor oder während dem Hineindrücken in den Presskasten in der Höhe zusammengedrückt auf eine Höhe, die gleich oder geringer ist als die Höhe der Befüllöffnung des Presskastens.

Dadurch kann ohne weitere Maßnahmen das so zusammengedrückte, vorverdichtete Pressgut durch die Befüllöffnung in den Presskasten hinein bewegt werden, beispielsweise hinein geschoben werden.

### (Breite einhalten:)

Aus dem gleichen Grund ist es vorzugsweise voll, dass das lose Pressgut vor dem Hineindrücken in den Presskasten entweder über eine gleiche oder geringere Breite verteilt auf dem Boden des Vorratsbehälters angeordnet wird als die Breite der Befüllöffnung beträgt oder vor oder während dem Hineindrücken in den Presskasten in der Breite zusammengedrückt wird auf eine solche Breite, die geringer ist als die Breite der Befüllöffnung.

### (Füllen während Pressen:)

Um den Durchsatz der Ballenpresse zu erhöhen, wird vorzugsweise während des Verpressens des Pressgutes im Presskasten bereits die nächste Füllung vorbereitet. Hierzu wird vorzugsweise zumindest der geleerte Sammelwagen von der Kippvorrichtung zurück bewegt in die Andock-Stellung, in der er auf dem Untergrund steht und von der der Befestigungsvorrichtung und damit der Kippvorrichtung gelöst werden kann, insbesondere bereits ein neuer, gefüllter Sammelwagen an der Kippvorrichtung befestigt werden.

Während des Pressens des Ballens kann gegebenenfalls auch bereits der Vorratsbehälter der Befüllvorrichtung wieder gefüllt werden, denn der Vorratsschieber kann aus seiner vorderen Endstellung, in der er Bestandteil einer Seitenwand des Presskastens ist, bereits zurückgefahren werden, sobald der Pressstempel die Befüllöffnung passiert hat und weiter vorwärts nach unten fährt, und erst recht während er anschließend zurück in seine obere Ausgangsstellung verfährt.

Gegebenenfalls kann der Vorratsbehälter sogar dann wieder befüllt werden, wenn der Vorratsschieber seine von der Befüllöffnung des Presskastens am weitesten beabstandete Ausgangsstellung noch nicht erreicht hat, wobei dann jedoch der Raum auf der von der Frontfläche des Vorratsschiebers abgewandten Seite, die ja beim Verpressen Teil der Seitenwand des Presskastens ist, nach oben hin abgedeckt sein muss, um ein Hineinfallen von Pressgut in diesen Bereich zu vermeiden.

### (Schrägfahrt:)

Um das Einfüllen in den Vorratsbehälter auf einem möglichst niedrigen Höhenniveau durchführen zu können, wird das lose Pressgut vor dem Hineindrücken in den Presskasten nach oben geschoben bis auf die Höhe der Befüllöffnung.

### (Vorratsbehälter anheben:)

Alternativ kann das Pressgut vor dem Hineindrücken in den Presskasten nach oben gehoben werden bis auf die Höhe der Befüllöffnung, insbesondere zusammen mit dem Vorratsbehälter, in dem es sich befindet.

### c) Ausführungsbeispiele

Ausführungsformen gemäß der Erfindung sind im Folgenden beispielhaft näher beschrieben. Es zeigen:
- **Figur 1a**:: die Hub-Kipp-Vorrichtung als separate Baugruppe in der Seitenansicht, mit dem Schwenkarm annähernd in der oberen Endlage,
- **Figur 1b:**: die Kippvorrichtung in vergrößerter Detaildarstellung, mit Blickrichtung entgegengesetzt zur Blickrichtung der **Figur 1a****,** noch näher an der oberen Endlage als in **Figur 1a****,**
- **Figur 1c:**: die Kippvorrichtung der **Figuren 1a**, b in der Aufsicht von oben, mit dem Schwenkarm in der unteren Endlage beim Einschieben eines Sammelwagens,
- **Figur 2:**: eine erste Bauform einer erfindungsgemäßen Ballenpresse mit integrierter Hub-Kipp-Vorrichtung in perspektivischer Ansicht,
- **Figur 2a:**: die Ballenpresse der **Figur 2** in der Seitenansicht, mit dem Schwenkarm annähernd in der unteren Endlage,
- **Figur 2b:**: die Ballenpresse in der Stellung gemäß **Figur 2a** in einer anderen Seitenansicht mit Blickrichtung entgegengesetzt zur **Figur 2a****,**
- **Figur 2c:**: die Ballenpresse gemäß **Figur 2** in der Frontansicht, also mit Blick auf die Entnahmetür,
- **Figur 2d:**: die Ballenpresse gemäß **Figur 2** in der Aufsicht von oben bei geöffnetem Deckel des Vorratsbehälters,
- **Figur 3a:**: die Ballenpresse der **Figur 2** in der Seitenansicht, mit dem Schwenkarm in einer mittleren Schwenklage,
- **Figur 3b:**: die Ballenpresse in der Stellung gemäß **Figur 3a** in einer anderen Seitenansicht mit Blickrichtung entgegengesetzt zur **Figur 3a****,**
- **Figur 4:**: die Ballenpresse gemäß der vorhergehenden Figuren in perspektivischer Ansicht, mit dem Schwenkarm annähernd in der oberen Endlage und einem Sammelwagen eingehängt in der Hub-Kipp-Vorrichtung,
- **Figur 4a:**: die Ballenpresse in der Funktionsstellung gemäß **Figur** 4 in der Seitenansicht
- **Figur 4b:**: die Ballenpresse in der Stellung gemäß **Figur 4a** in einer anderen Seitenansicht mit Blickrichtung entgegengesetzt zur **Figur 4a****,**
- **Figur 5:**: eine zweite Bauform einer Kasten-Ballenpresse in der Seitenansicht, in die die Hub-Kipp-Vorrichtung integriert oder an dieser verbaut werden kann.

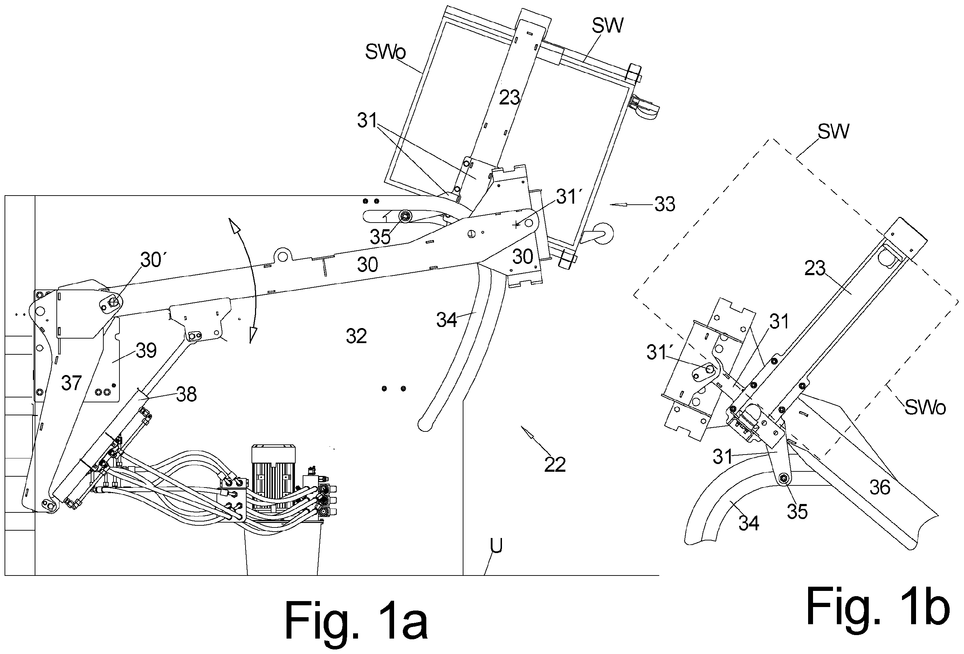

Die Figuren 1a - c zeigen die Hub-Kipp-Vorrichtung 22 einschließlich der Kippvorrichtung 33 in der Seitenansicht, also mit Blickrichtung in Richtung der Armachse 30', um die der Schwenkarm 30 verschwenkt, als separate Baugruppe.

In **Figur 1a** weist der Schwenkarm 30 von seiner Armachse 30' aus schräg nach oben und befindet sich nahe seiner oberen Endlage, und die Nutenrolle 35 befindet sich bereits im oberen Teil der Führungsnut 34.

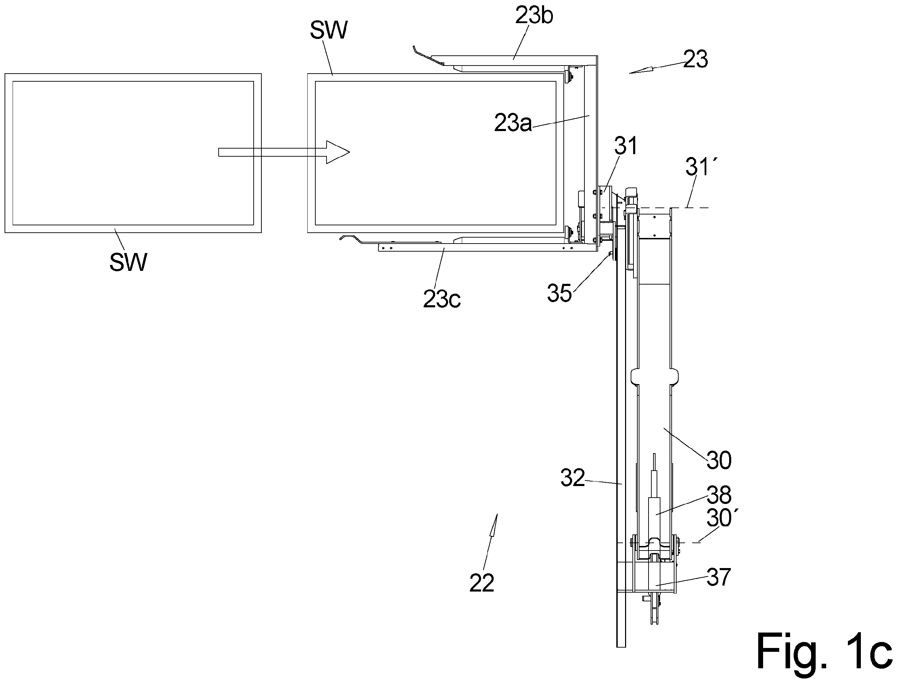

Dementsprechend ist der an einer Befestigungsvorrichtung 23 befestigte Sammelwagen SW, welche über ein Kippteil 31 an dem Schwenkarm 30 gehalten ist, bereits weit vom Untergrund U hochgehoben, auf dem er zum Einhängen in der abgesenkten Befestigungsvorrichtung 23 gemäß **Figur 1c** herangefahren wird.

Dabei weist die obere Öffnung SWo des Sammelwagens SW bereits nach links und kaum mehr nach oben, wie im auf dem Untergrund U stehenden Ausgangszustand des Sammelwagens SW.

Es ist anhand von **Figur 1a** vorstellbar, dass durch nur geringfügiges weiteres Hochschwenken des Schwenkarmes 30 sich das Kippteil 31 weiter nach oben bewegt und dadurch in **Figur 1a** die Nutenrolle 35 in der Führungsnut 34 aufgrund der in diesem Bereich fast horizontalen Verlauf sich vom oberen Ende der Führungsnut 34 wieder weg, also zurück, bewegt und dabei das Kippteil 31 weiter gekippt wird, bis die obere Öffnung SWo des Sammelwagens SW schräg nach unten weist und dadurch sein Inhalt nach unten herausfällt.

Genau diese noch weiter hochgeschwenkte Stellung des Schwenkarmes 30 und noch stärker gekippte Stellung des Kippteiles 31 zeigt **Figur 1b**, allerdings in der entgegengesetzten Blickrichtung zur **Figur 1a**.

Die Kippachse 31' befindet sich im Schwenkarm 30 von dessen Armachse 30' aus gesehen außerhalb der Führungsnut 34, die in diesem oberen Endbereich annähernd waagrecht verläuft.

Wie am besten **Figur 1c** erkennen lässt, ist die Führungsnut 34 in einem Grundkörper 32 in Form einer Grundplatte 32 eingearbeitet.

Der Schwenkarm 30 - an dem die Befestigungsvorrichtung 23 fliegend gelagert ist, also an nur einem einzigen Schwenkarm 30 gelagert ist - ist in einem massiv ausgebildeten, armförmigen Lagerbock 37 gelagert, der über eine verstärkende Flanschplatte 39 auf der einen Seite, der Armseite, der Grundplatte 32 befestigt ist.

Das Kippteil 31 befindet sich dagegen auf der anderen Seite, der Wagenseite, der Grundplatte 32, und die Kippachse 31', über die Kippteil 31 und Schwenkarm 30 gelenkig miteinander verbunden sind, befindet sich in der Aufsicht auf die Grundplatte 32 gemäß **Figur 1a** außerhalb der Grundplatte 32, weshalb der Schwenkarm 30 auch über das von seiner Armachse 30' ausgesehen entfernte Ende der Grundplatte 32 hinausreicht.

Dementsprechend befindet sich auch die Befestigungsvorrichtung 23 auf der Wagenseite der Grundplatte 32, und in **Figur 1c** - in der sich der Schwenkarm 30 nahe oder in seiner unteren Endstellung befindet - ist erkennbar, dass diese eine U-förmige Gabel aufweist, die mit ihrer Öffnung lotrecht von der Grundplatte 32 weg weist, und zwischen deren beiden frei endenden Schenkeln 23b, c ein Sammelwagen SW auf dem Untergrund U fahrend eingefahren werden kann die beiden frei endenden Schenkel 23b, c bis nahe an oder an den verbindenden Schenkel 23a der Befestigungsvorrichtung 23 heran, wo er gegenüber der Befestigungsvorrichtung 23 arretiert werden kann, insbesondere durch Verrasten.

Zum Verschwenken des Schwenkarmes 30 wird ein Hydraulikzylinder 38, der abseits der Armachse 30' zwischen dem Lagerbock 37 und dem Schwenkarm 30 eingesetzt ist, aus- oder eingefahren. Der Hydraulikzylinder 38 wird über eine von einem Elektromotor angetriebene eigene Hydraulikpumpe, die ebenfalls auf der Armseite an der Grundplatte 32 befestigt ist oder aus einer davon entfernten Hydraulik-Quelle mit Hydraulikmedium versorgt und kann sowohl in Ausfahrrichtung als auch in Einfahrrichtung beaufschlagt werden.

Somit kann die Hub-Kipp-Vorrichtung 22 neben einer Baugruppe mit einer Einfüllöffnung positioniert werden, in die hinein ein Sammelwagen SW entleert werden soll.

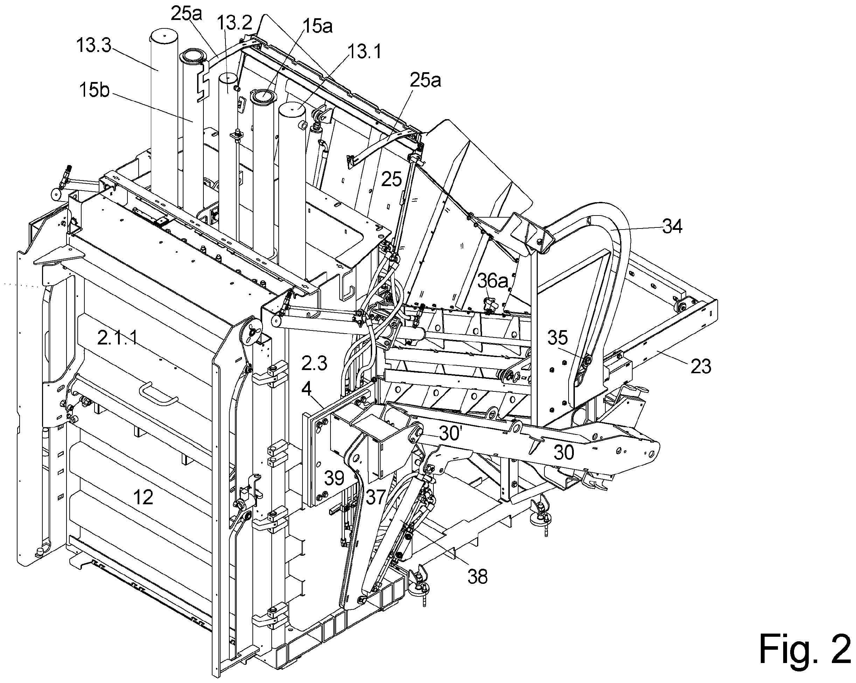

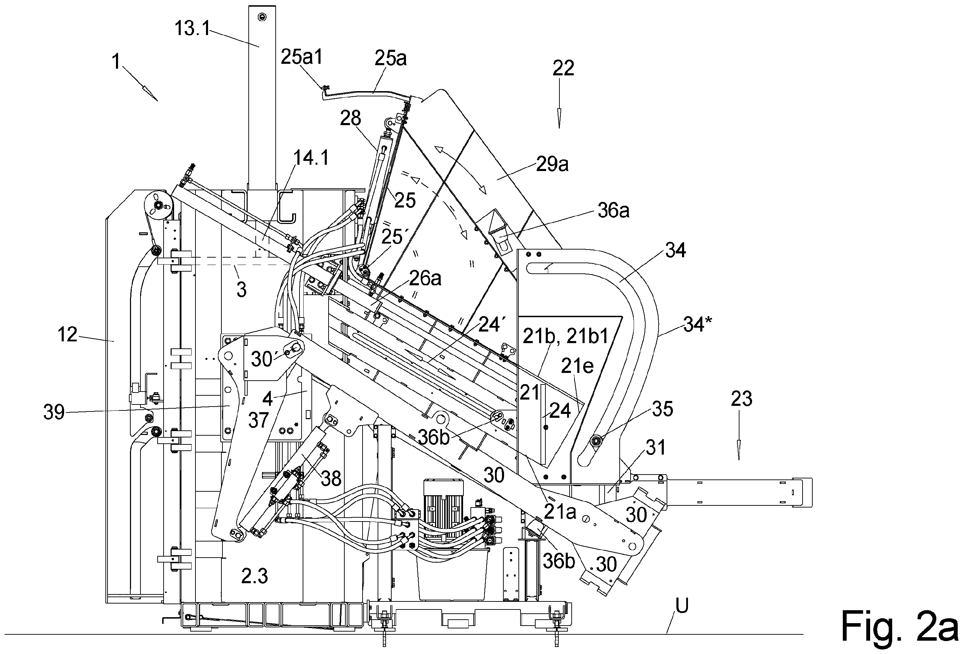

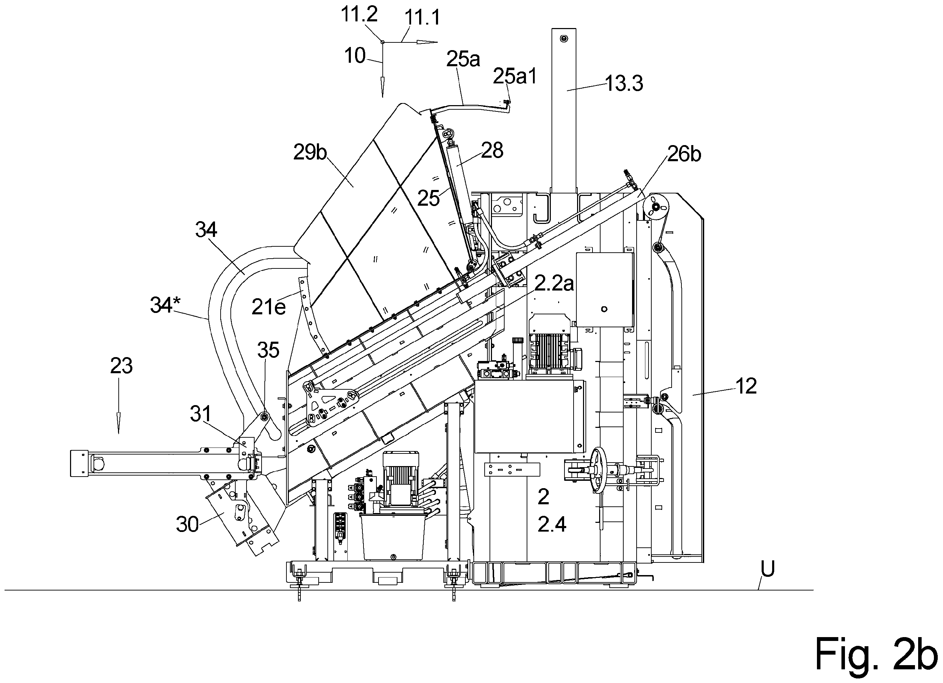

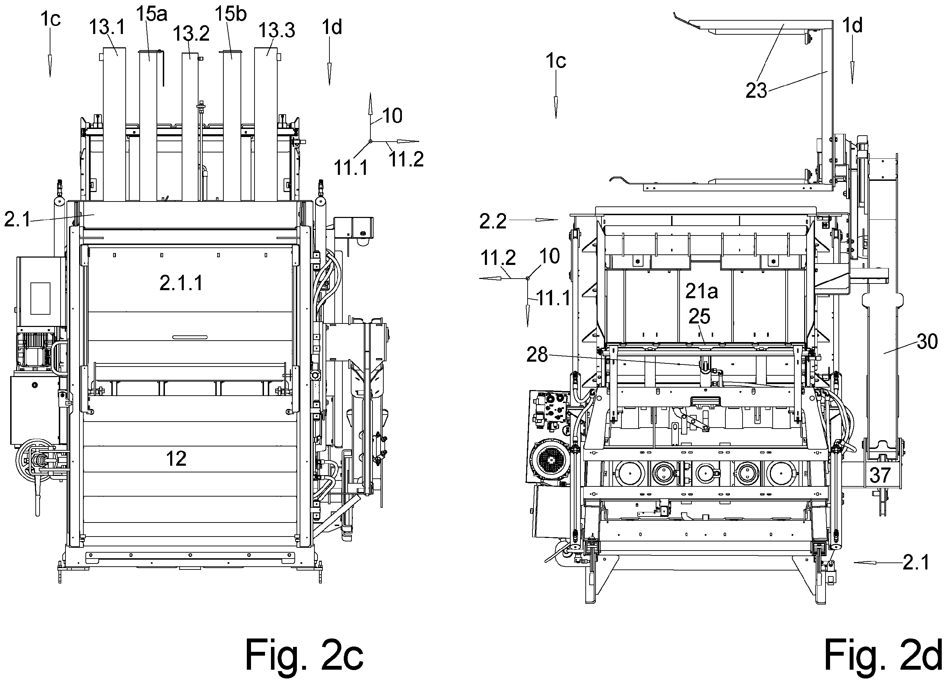

Die **Figuren 2 bis 4b** zeigen die Hub-Kipp-Vorrichtung **22** integriert in oder verbaut an einer ersten Bauform einer Kasten-Ballenpresse **1,** wobei die in den **Figuren 1a** - **c** als Befestigung-Basis dienende Grundplatte **32** der separaten Hub-Kipp-Vorrichtung **22** in diesem Fall - siehe am besten **Figur 2** **und** **2a** - aufgeteilt ist in eine Flanschplatte **39,** die den Lagerbock **37** trägt, und an einer Gegen-Flanschplatte **4,** welche Bestandteil der restlichen Kasten-Ballenpresse 1 ist, verschraubt ist, sowie ein Kulissenblech **34*,** in dem die Führungsnut **34** eingearbeitet ist, und welches ebenfalls an dem Rest der Kasten-Ballenpresse 1 verschraubt ist.

Vorzugsweise ist der Hydraulik-Kreis der Ballenpresse 1 mit dem Hydraulikzylinder **38** der Hub-Kipp-Vorrichtung **22** verbunden und wird von diesem mit Hydraulikmedium versorgt, statt eine eigene Hydraulikpumpe zu benutzen.

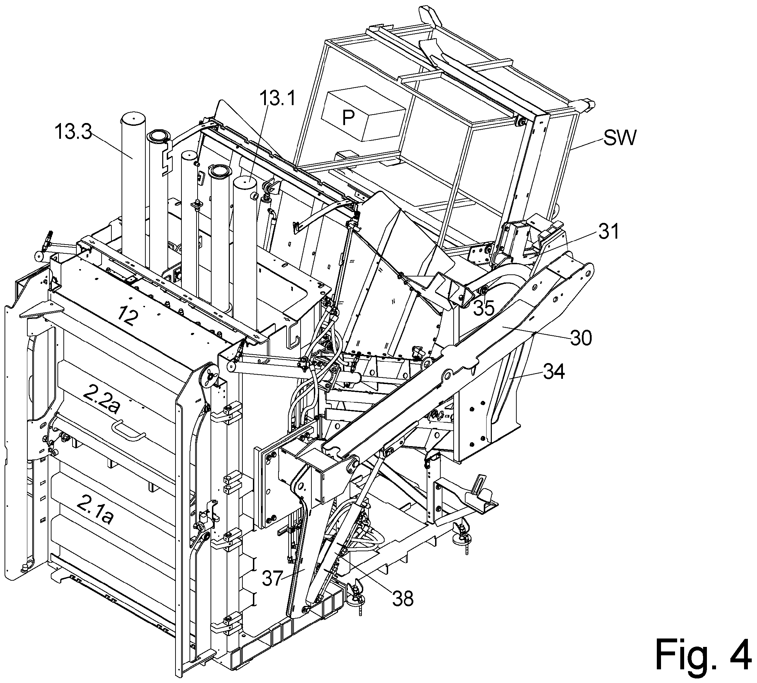

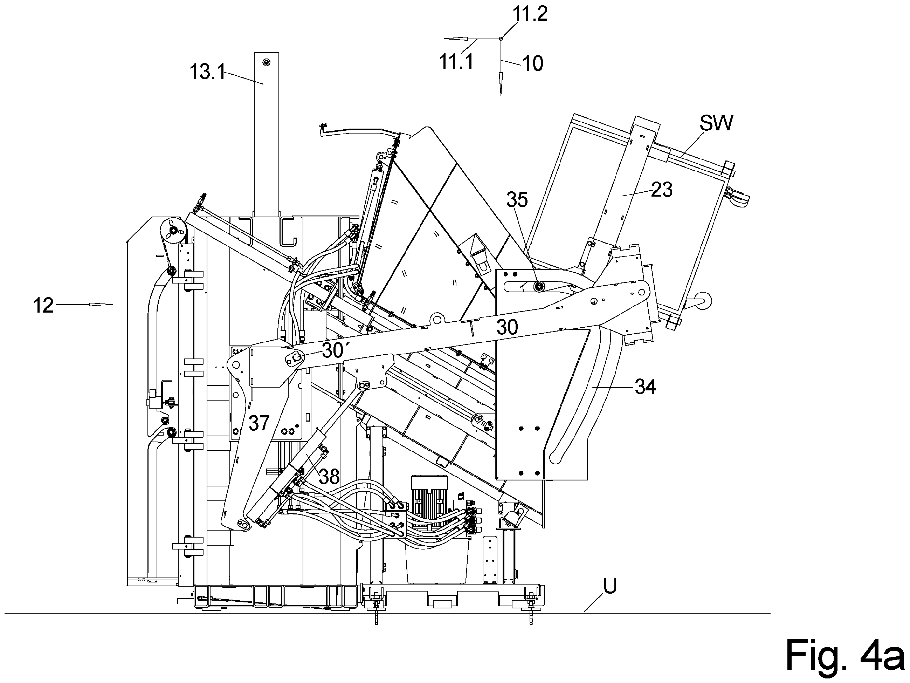

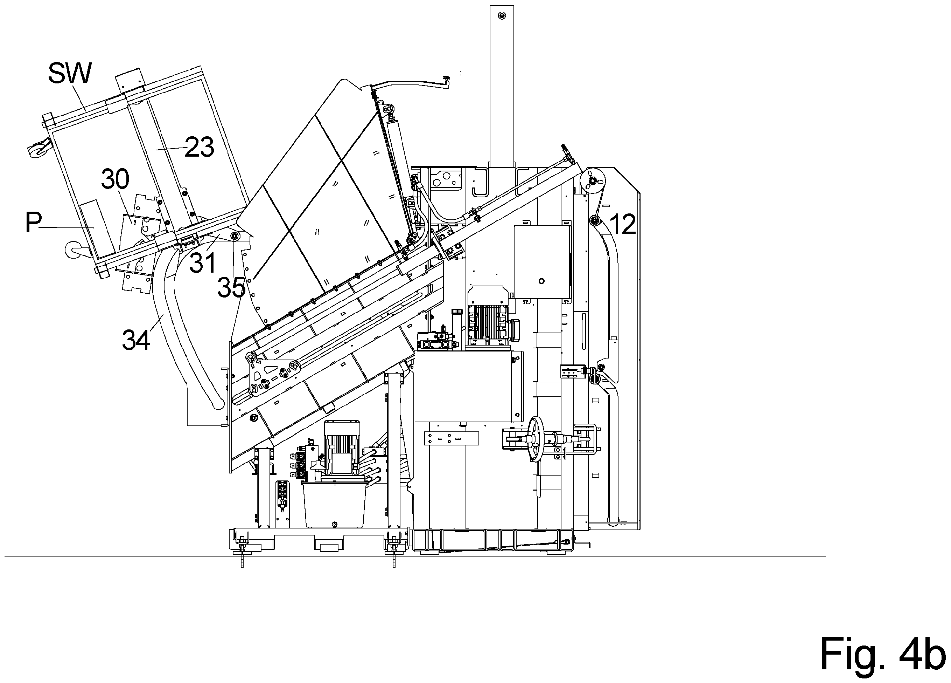

In den **Figuren 2****,** **3** **und** **4** befindet sich der Schwenkarm **30** in einer jeweils anderen Funktionsstellung, und nur in den **Figuren 4a****, b** ist dabei ein Sammelwagen **SW** in der Befestigungsvorrichtung **23** dargestellt.

Dabei ist zu erkennen, dass die Armachse **30'** in Blickrichtung der Armachse **30'** im Breitenbereich des Presskastens **2** liegt.

Die dargestellte vertikal wirkende Kasten-Ballenpresse **1** umfasst als gattungsgemäße Bauteile einen Presskasten **2** mit einem Boden **2a**, der in der Aufsicht betrachtet in diesem Fall eine etwa rechteckige Form besitzt, sodass von seinen Außenbereichen aus insgesamt vier Seitenwände **2.1 bis 2.4** nach oben ragen, nämlich eine Frontwand **2.1,** eine dieser gegenüberliegende Rückwand **2.2,** sowie diese beiden Wände miteinander verbindende Längswände **2.3, 2.4.**

In dem Presskasten **2** ist - wie am besten in den **Figuren 2a** ersichtlich - ein Pressstempel **3** in Form einer horizontal und damit parallel zum Boden **2a** des Presskastens **2** liegenden Platte in der Vertikalen, der Pressrichtung **10,** auf und ab verfahrbar, der das im Presskasten **2** liegende Pressgut **P** gegen den Boden **2a** verpressen kann.

Der Pressstempel **3** ist an den unteren Enden der Kolbenstangen - sichtbar ist in **Figur 2a** nur die Kolbenstange **14.1,** während **14.2 und 14.3** in Blickrichtung dahinter stehen - von mehreren vertikal in der zweiten horizontalen Querrichtung **11.2** beabstandet nebeneinander stehenden und über das obere Ende des Presskastens **2** hinausragenden Presszylindern **13.1** bis **13.3** befestigt, die als Hydraulikzylinder ausgebildet sind.

Zum Aufbringen hoher Presskräfte werden die beiden äußeren Presszylinder **13.1** und **13.3** nach unten ausgefahren, während der mittlere Presszylinder **13.2** mit seinem geringeren Querschnitt als Eilgang-Zylinder eingesetzt wird, beispielsweise um den Pressstempel 3 schnell nach oben in die deaktivierte Stellung zurück zu verfahren.

Zwischen den in einer gemeinsamen Ebene, parallel zueinander angeordneten, vertikal verlaufenden Presszylindern **13.1** bis **13.3** befindet sich jeweils eine Führungsstange **15a, b,** deren untere Enden ebenfalls mit dem Pressstempel **3** fest verbunden sind und eine Schrägstellung und damit ein Verkanten des Pressstempels **3** im Presskasten **2** verhindern sollen.

Die an der Frontseite **1a** der Kasten-Ballenpresse **1** vorhandene Frontwand **2.1** des Presskastens **2** ist über eine vertikal stehende Schwenkachse gelenkig an einer der Längswände **2.3** befestigt und kann gegenüber dieser wie eine Tür aufgeschwenkt werden - wie in **Figur 2b****, c** geschlossen dargestellt - zur Entnahme eines fertig hergestellten Ballens.

Bei einer gattungsgemäßen Vertikal-Kasten-Ballenpresse ist die Rückwand **2.2** des Presskastens **2** meist geschlossen oder weist höchstens - falls eine Umreifung der fertigen Ballen vorgesehen ist - Schlitze für das Hindurchtreten des Umreifungsmediums auf.

Die die Heckseite **1b** darstellende Rückwand **2.2** ist vorzugsweise als einstückiges Schweißteil hergestellt, und die Befüllung des Presskastens **2** mit Pressgut **P** erfolgt von der Frontseite **1a** her, indem in der beweglichen Frontwand **2.1,** die dadurch eine Entnahmetür **12** bildet, der obere Teile als Befüllklappe **2.1.1** ausgebildet ist, die beweglich am Rest der Fronttür **2.1** befestigt ist und entlang von Führungen nach unten gefahren werden kann, sodass im oberen Teil der Frontwand **2.1** eine Befüllöffnung offen steht, über die von der Frontseite **1a** her Pressgut eingeworfen werden kann.

Zwischen der Frontseite **1a** und der Heckseite **1b** verläuft zum einen die Bedienerseite **1c**, an der die Bedienelemente wie Eingabeeinheit, Notschalter und Ähnliches für den Bediener angeordnet sind. Der Schwenkarm **30** der Hub-Kipp-Vorrichtung 22 ist dagegen auf der der Bedienerseite **1c** gegenüberliegenden Anti-Bedienerseite **1d** angeordnet. Die in der Aufsicht U-förmige Befestigungsvorrichtung **23** zum Aufnehmen des Sammelwagens **SW** ragt vor die Frontseite **1a**. Die dargestellte vertikal wirkende, Kasten-Ballenpresse **1** besitzt zum einen zusätzlich im oberen Bereich der die Heckseite **1b** darstellenden Rückwand **2.2** eine Befüllöffnung **2.2a,** durch die sie automatisch befüllt werden kann.

Die zu öffnende Befüllöffnung in der Frontwand **2.1,** gebildet wie beschrieben durch Ausbildung einer Befüllklappe **2.1.1** in der Entnahmetür **2.1,** zusätzlich vorhanden sein, jedoch ist dies nicht Voraussetzung für die Realisierung der Erfindung. Die vordere Frontwand **2.1** kann als geschlossene, nur insgesamt als Tür bewegliche, Entnahmetür **12** ausgebildet sein.

Das automatische Befüllen erfolgt mittels einer Befüll-Vorrichtung **20,** die zusätzlich einen kastenförmigen Vorratsbehälter **21** umfasst, der auf der Außenseite an die Rückwand **2.2** des Presskastens **2** anschließt und einen in den Figuren 2 - 4 vom Presskasten **2** aus schräg nach unten abfallenden Boden **21a** besitzt, von dem Seitenwände **21c, d** und am freien Ende eine Endwand **21e** aufragen, wobei die Seitenwände bis zur Befüllöffnung **2.2a** in der Rückseite des Presskastens **2** reichen.

Die Oberseite **21b** des Vorratsbehälters **21** ist durch eine Deckelklappe **25** verschließbar, die um eine horizontal verlaufende Schwenkachse **25'** nahe des Presskastens **2** zwischen der herabgeklappten, die Oberseite **21b** verschließenden Stellung der Deckelklappe **25,** in der diese mit ihrer Unterseite parallel zum Boden **21a** des Vorratsbehälters **21** verläuft, in eine demgegenüber nach oben aufgeschwenkte Befüllstellung - wie dargestellt - verschwenkt werden kann mit Hilfe eines Schwenkzylinders **28.**

In dieser Befüllstellung kann ein mit Pressgut **P** gefüllter Sammelwagen **SW,** der an der Oberseite **SWo** offen ist, hochgeschwenkt und über die Oberkante der Endwand **21e** des Vorratsbehälters **21** in diesen hinein entleert werden.

Das Hochheben, Kippen, Entleeren, Zurückkippen und Absetzen des Sammelwagens **SW** erfolgt in Regel automatisch mittels der erfindungsgemäßen Hub-Kipp-Vorrichtung **22,** wie sie in den **Figuren 2 - 4** dargestellt und zuvor anhand der **Figuren 1a bis 1c** beschrieben wurde.

Nach Zurückschwenken des Sammelwagens **SW** kann die Deckelklappe **25** mit Hilfe des Schwenkzylinders **28** geschlossen werden, wobei der Schwenkzylinder **28** eine ausreichende Schwenkkraft zur Verfügung stellen kann, damit über die Höhe der Oberkante der Endwand **21e** vorstehendes loses Pressgut **P** von der Unterseite **25b** der Deckelklappe 25 unter dieses Niveau zusammengedrückt wird.

Da nur ein Schwenkzylinder **28** verwendet werden soll, der in der 2. Querrichtung **11.2** mittig an der Deckelklappe **25** ansetzt, muss vermieden werden, dass beim Herabdrücken der Deckelklappe **25** in die Oberseite des Vorratsbehälters **21** hinein durch auf den beiden Seiten unterschiedlich starres Pressgut **P** die Deckelklappe **25** an ihrem freien Ende an einer Seite nicht ganz die Oberseite des Vorratsbehälters **21** erreicht und etwas schräg liegt und dadurch die andere Seite zu tief liegt, und zwar im Bewegungsweg des Schiebers **24** und diesen blockiert.

Zu diesem Zweck sind an den beiden in der 2. Querrichtung **11.2** seitlichen Enden der Deckelklappe **25** die am besten in **Figur 2** **und** **2b** sichtbaren Anschlag-Arme **25a** an der freien Endkante der Deckelklappe 25 angeordnet und ragen von dieser nach hinten ab, also in die vom Vorratsbehälter 21 abgewandte Richtung.

An ihren freien Enden besitzen sie jeweils einen Anschlag-Haken **25a1,** der beim Schließen der Deckelklappe **25** an der oberen Endkante der Rückwand **21e** des Vorratsbehälters **21** anschlägt und ein zu tiefes Einsinken des freien Endes der Deckelklappe **25** in den Vorratsbehälter **21** hinein verhindert

Im Inneren des Vorratsbehälters **21** ist ein Vorratsschieber **24** zwischen einer zurückgezogenen Stellung nahe der Endwand **21e** und einer vorgeschobenen bzw. vorgezogenen Stellung nahe der Befüllöffnung **2.2a** des Presskastens 2 verfahrbar, wobei der Vorratsschieber **24** mit seiner Unterkante nahe am Boden **21a** entlangfährt.

In der vorgeschobenen Endstellung befindet sich der Vorratsschieber **24** vorzugsweise nicht nur nahe der Befüllöffnung **2.2a,** sondern in dieser Befüllöffnung **2.2a,** die er vollständig verschließt, sodass er Bestandteil der Rückwand **2.2** des Presskastens **2** wird und seine zum Presskasten **2** hin weisende Frontfläche mit der Innenfläche der übrigen Rückwand **2.2** fluchtet.

Bewegt wird der Vorratsschieber **24** mittels zweier Schieberzylinder **26a, b**, die entlang der Außenseiten der Seitenwände **21c, d** des Vorratsbehälters **21** und auch entlang der Längswände **2.3, 2.4** des Presskastens **2** in der ersten horizontale Querrichtung **11.1** verlaufen, wobei das eine Ende jedes Schieberzylinders **26a, b** mit je einer der Längswände **2.3, 2.4** in der Nähe der Frontwand **2.1** befestigt ist, während das andere Ende durch die Seitenwand **21c, d** des Vorratsbehälters **21** hindurch mit dem Vorratsschieber **24** verbunden ist.

Die Schieberzylinder **26a, b** sind vorzugsweise als doppelt wirkende, in beide Richtungen beaufschlagbare Hydraulikzylinder ausgebildet.

Bei der Bauform der **Figuren 2 bis 4** verläuft der Boden **21a** des Vorratsbehälters **21** schräg zur heckseitigen Befüllöffnung **2.2a** in der Rückwand **2.2** des Presskastens **2** hin ansteigt, und der plattenförmige Vorratsschieber **24** steht vertikal, und füllt den Querschnitt des Vorratsbehälters **21,** also quer zur Ausfahrrichtung der Schieberzylinder **26a, b**, der Schieberichtung **24'** des Vorratsschiebers **24,** vollständig aus, damit kein Pressgut **P** dazwischen geraten kann.

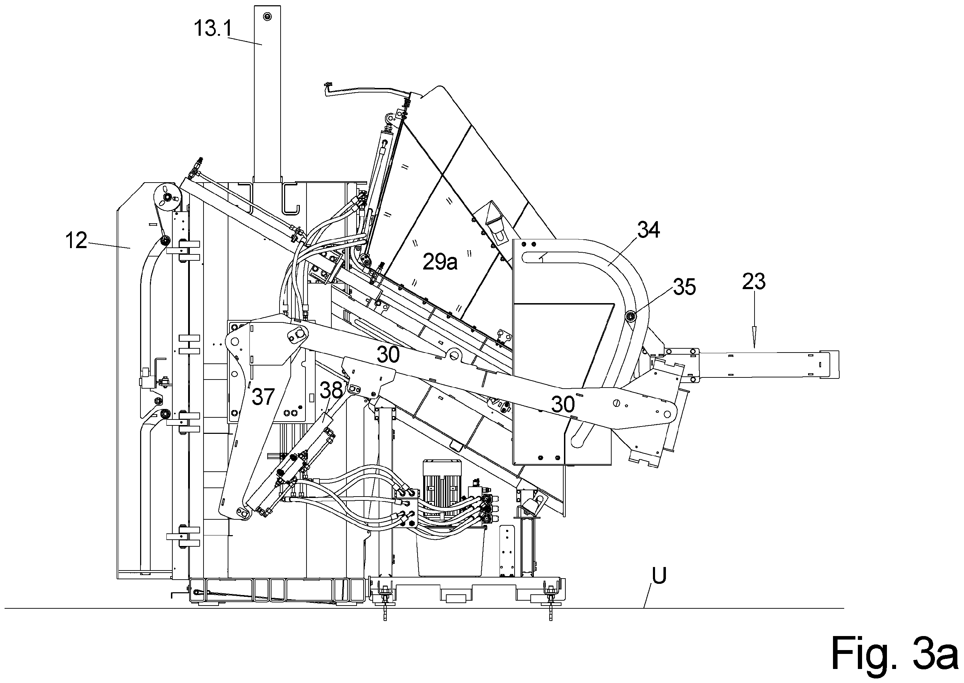

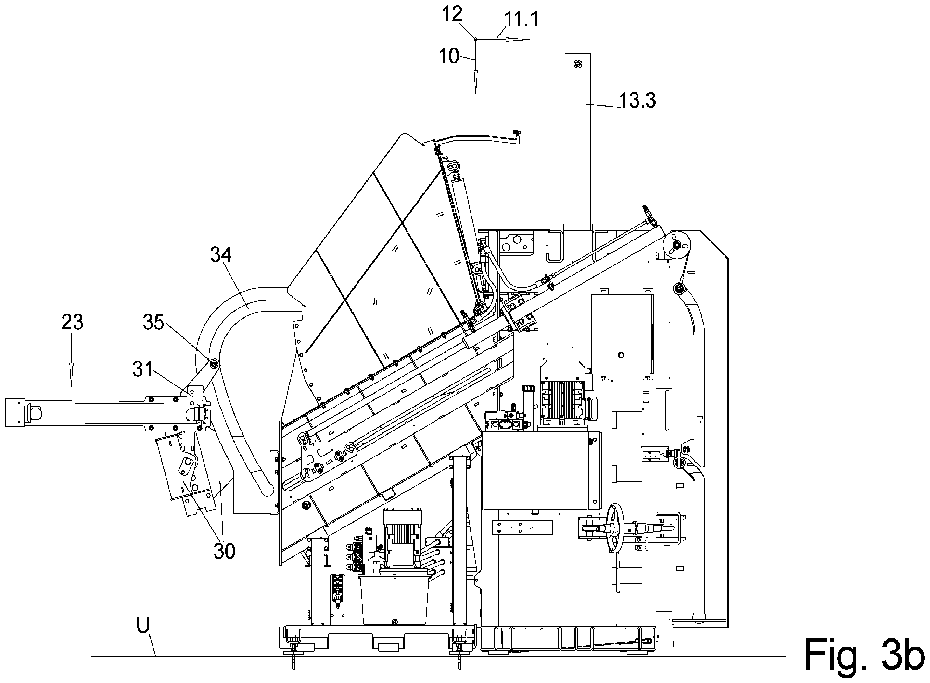

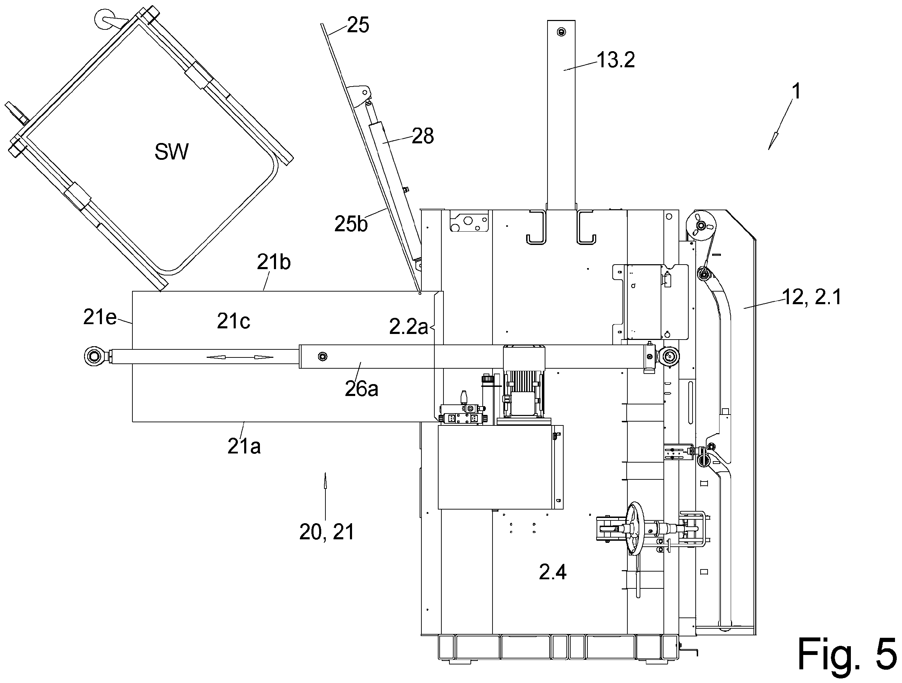

Dadurch liegt sein vom Presskasten **2** abgewandtes freies Ende, also auch die Endwand **21e** und deren Oberkante, deutlich tiefer als bei der zweiten Bauform gemäß nachfolgender **Figur 5****,** sodass der Sammelwagen **SW** zum Entleeren über diese Oberkante hinweg weniger weit hochgehoben werden muss und damit in seiner - in **Figur 3a** ebenfalls dargestellten - Entleerstellung auch weniger weit nach oben ragt, und zwar kaum über das Höhen-Niveau des oberen Endes der restlichen Ballenpresse, insbesondere der oberen Enden der Presszylinder **13.1 - 13.3,** hinaus.

**Figur 5** zeigt diese zweite Bauform einer Kasten-Ballenpresse 1, in die die Hub-Kipp-Vorrichtung 22 integriert oder an dieser verbaut sein könnte, bei der der der wesentliche Unterschied gegenüber der ersten Bauform der **Figuren 2 bis 4** darin besteht, dass der Boden **21a** des Vorratsbehälter **21** horizontal verläuft.

Zusätzlich ist in **Figur 5** die Deckelklappe **25** hoch geschwenkt und geöffnet dargestellt, wobei deren Unterseite **25b** nach schräg unten weist, wie es notwendig ist, damit Packgut **P** aus einem Sammelwagen **SW** in den Vorratsbehälter **21** hineinfallen kann.

Die Endwand **21e** des Vorratsbehälters **21** steht wie bei der 1. Bauform vertikal, und ebenso der darin angeordnete Vorratsschieber **24,** jedoch ist die Schieberichtung **24'** des Vorratsschieber **24** nun horizontal.

Die übrige Ausbildung der Ballenpresse 1 entspricht derjenigen der ersten Bauform der **Figuren 2 bis 4****.**

Ferner sind in den **Figuren 2a bis 4a** die am besten in **Figur 2a** erkennbaren, optionalen, Seitenbleche **29a, b** vorhanden, die fluchtend oder parallel zu den Seitenwänden **21c, d** des Vorratsbehälters **21** diese nach oben verlängern, wodurch das Füllvolumen des Vorratsbehälters **21** vergrößert wird. Die Deckelklappe **25** schwenkt zwischen den Seitenblechen **29a, b** nach unten bis in die untere Endstellung.

Diese untere Endstellung ist bei der Verwendung als Deckelklappe **25** eine zu dem Boden **21a** parallele Endstellung, in der dann der Abstand zwischen geschlossener Deckelklappe **25** und Boden **21a** über den gesamten Verschiebeweg des Vorratsschieber **24** gleich bleibt, insbesondere bis dieser seine Endstellung in der Befüllöffnung **2.2a** erreicht hat und dort zum Bestandteil der entsprechenden Seitenwand **2.2** wird.

Selbstverständlich kann mithilfe der erfindungsgemäßen Hub-Kipp-Vorrichtung **22** der Inhalt eines Sammelwagens **SW** auch direkt in einen Presskasten **2** hinein entleert werden, nicht nur in einen diesem Presskasten **2** vorgelagerten, als Pufferspeicher dienenden, Vorratsbehälter **21.**

Dabei kann es sich wie dargestellt um eine Kasten-Ballenpresse, insbesondere eine vertikale wirkende Kasten-Ballenpresse handeln, oder auch um eine - dann meist horizontal wirkende - Kanal-Ballenpresse.

### BEZUGSZEICHENLISTE

- 1: Ballenpresse, Kasten-Ballenpresse
- 1a: Frontseite
- 1b: Heckseite
- 1c: Bedienerseite
- 1d: Anti-Bedienerseite
- 2: Presskasten
- 2a: Boden
- 2.1: Seitenwand, Frontwand
- 2.1.1: Befüllklappe
- 2.1a: Entnahmeöffnung
- 2.2: Seitenwand, Rückwand
- 2.2a: Befüllöffnung
- 2.3, 2.4: Seitenwand, Längswand
- 3: Pressstempel
- 4: Gegen-Flanschplatte

- 10: Pressrichtung, Vertikale
- 11.1: 1. Querrichtung, Durchlaufrichtung
- 11.2: 2. Querrichtung
- 12: Entnahmetür
- 13.1-13.3: Presszylinder
- 14.1 -14.2: Kolbenstange
- 15a, b: Führungsstange

- 20: Befüllvorrichtung
- 21: Vorratsbehälter
- 21a: Boden
- 21: Oberseite
- 21b1: Einfüllöffnung,
- 21c, d: Seitenwand
- 21e: Endwand
- 22: Hub-Kipp-Vorrichtung
- 23: Befestigungsvorrichtung
- 24: Vorratsschieber
- 24': Bewegungsrichtung, Schieberichtung
- 25: Deckelklappe
- 25': Schwenkachse
- 25*: Führungsklappe
- 25a: Anschlag-Arm
- 25a1: Anschlag-Haken
- 25b: Unterseite
- 26a, b: Schieberzylinder
- 27: Abdeckelement
- 28: Schwenkzylinder
- 29a, b: Seitenblech
- 30: Schwenkarm
- 30': Armachse
- 31: Kippteil
- 31': Kippachse
- 32: Grundgestell, Grundplatte
- 33: Kippvorrichtung
- 34: Führungsbahn, Führungsnut
- 34*: Kulissenblech
- 35: geführtes Element, Nutenstein, Nutenrolle
- 36a, b: oberer/unterer Endanschlag
- 37: Lagerbock
- 38: Hydraulikzylinder
- 39: Flanschplatte

- P: Pressgut
- SW: Sammelwagen
- SWo: obere Öffnung
- U: Untergrund

## Patentansprüche

1. **Hub-Kipp-Vorrichtung** (22) zum Aufnehmen, Bewegen und Entleeren eines mit Verpackungsmaterialien gefüllten Sammelwagens (SW) umfassend
- ein Grundgestell (32),
- einen Schwenkarm (30), der schwenkbar um eine Armachse (30') am Grundgestell (32) befestigt ist,
- eine Befestigungsvorrichtung (23) zum Befestigen des Sammelwagens (SW) an dem Schwenkarm (30),
- eine Kippvorrichtung (33) zum Kippen des Sammelwagens (SW),
- wobei die Kippvorrichtung (33) ein um eine Kippachse (31') schwenkbar am Schwenkarm (30) befestigtes Kippteil (31) umfasst,
- wobei an dem Kippteil (31) die Befestigungsvorrichtung (23) drehfest fixiert ist,
- wobei die Kippvorrichtung (33) eine Kulissenführung (33) mit einer Führungsbahn (34) und einem entlang dieser geführten Element (35) ist,
- wobei durch ein Hochschwenken des Schwenkarmes (30) die Befestigungsvorrichtung (23) und der daran befestigte Sammelwagen (SW) auf Höhe einer Einfüllöffnung einer Ballenpresse (1) bringbar ist,
- wobei das Kippteil (31) das geführte Element (35) trägt, und
- wobei durch das Hochschwenken des Schwenkarmes (30) abhängig vom Verlauf der Führungsbahn (34) das Kippteil (31) und damit der Sammelwagen (SW) derart kippbar ist, dass der Sammelwagen (SW) mit seiner im abgestellten Zustand oberen Öffnung (SWo) nach unten weist und sich dadurch schwerkraftbedingt entleert,
**dadurch gekennzeichnet, dass**
- die Vorrichtung nur einen Schwenkarm (30) umfasst.

2. Hub-Kipp-Vorrichtung nach Anspruch 1,
**dadurch gekennzeichnet, dass**
- die Führungsbahn (34) eine Führungsnut (34) ist, und
- das geführte Element (35) ein Nutenstein (35), insbesondere eine Nutenrolle (35) ist.

3. Hub-Kipp-Vorrichtung nach einem der vorhergehenden Ansprüche,
**dadurch gekennzeichnet, dass**
der Schwenkarm (30) zwischen der Armachse (30') und dem Kippteil (31) starr ausgebildet ist, insbesondere kein Gelenk umfasst,
und/oder
- die Armachse (30') und die Kippachse (31') parallel zueinander verlaufen,
- insbesondere horizontal liegen.

4. Hub-Kipp-Vorrichtung nach einem der vorhergehenden Ansprüche,
**dadurch gekennzeichnet, dass**
- der Schwenkarm (30) zwischen einem oberen und einem unteren Endanschlag (36a, b) verschwenkbar ist,
- insbesondere der Schwenkarm (30) in der unteren Endlage, also anliegend am unteren Endanschlag (36a), von der Armachse (30') schräg nach unten und in der oberen Endlage, also anliegend am oberen Endanschlag (36b), schräg nach oben weist.

5. Hub-Kipp-Vorrichtung nach einem der vorhergehenden Ansprüche,
**dadurch gekennzeichnet, dass**
- die Hub-Kipp-Vorrichtung (22) einen Lagerbock (37) umfasst, in dem der Schwenkarm (30) schwenkbar gelagert ist und
- der Hydraulikzylinder (38) zum Verschwenken des Schwenkarmes (30) zwischen dem Lagerbock (37) und dem Schwenkarm (30) befestigt ist,
und/oder
- der Schwenk-Antrieb für den Schwenkarm (30) ein Hydraulikzylinder (38) ist.

6. Hub-Kipp-Vorrichtung nach einem der vorhergehenden Ansprüche,
**dadurch gekennzeichnet, dass**
- der untere Teil der Führungsbahn (34), insbesondere der untere Anfangsbereich der Führungsbahn (34), ein Kreisbogen um die Armachse (30') ist
und/oder
- die Krümmung der Führungsbahn (34) in ihrem mittleren Bereich am stärksten ist.

7. **Ballenpresse** (1) zum Verpressen von insbesondere Verpackungsmaterialien zu Ballen, umfassend
- einen Presskasten (2) mit einem Boden (2a) und davon nach oben aufragenden Seitenwänden (2.1 - 2.4) sowie einer Entnahmeöffnung,
- einem im Presskasten (2) verfahrbaren Pressstempel (3),
- einer Befüllvorrichtung (20) mit einer Hub-Kipp-Vorrichtung (22) zum Aufnehmen, Bewegen und Entleeren eines mit Verpackungsmaterialien gefüllten Sammelwagens (SW) zum automatischen Befüllen des Presskastens (2) durch eine Befüllöffnung (2.2a),
**dadurch gekennzeichnet, dass**
- die Hub-Kipp-Vorrichtung (22) nach einem der vorhergehenden Ansprüche ausgebildet ist.

8. Ballenpresse nach Anspruch 7,
**dadurch gekennzeichnet, dass**
- die Hub-Kipp-Vorrichtung (22) an der Ballenpresse (1) befestigt ist,
- insbesondere der Lagerbock (37) an der Ballenpresse (1) verschraubt ist.

9. Ballenpresse nach Anspruch 7 oder 8,
**dadurch gekennzeichnet, dass**
- die Ballenpresse (1) eine Vertikal-Kasten-Ballenpresse (1) ist,
- der Pressstempel (3) im Presskasten (2) auf und ab beweglich ist.
- der Presskasten (2) eine durch eine Entnahme-Tür (12) verschließbare Entnahme-Öffnung (2.1a) aufweist,
und/oder
- bei nur einem vorhandenen Schwenkarm (30) dieser auf der von der Bediener-Seite (1c) abgewandten Anti-Bediener-Seite (1d) an der Ballenpresse (1) befestigt ist,
die Befestigungsvorrichtung (23) vom Schwenkarm (30) in Richtung Bediener-Seite (1c) abstrebt.

10. Ballenpresse nach einem der Ansprüche 7 bis 9,
**dadurch gekennzeichnet, dass**
- die Befüllvorrichtung (20) einen Vorratsbehälter (21) zur Aufnahme von losem Pressgut (P) umfasst, der eine Einfüllöffnung (21b1), insbesondere im oberen Bereich, insbesondere in der Oberseite (21b), des Vorratsbehälters (21) umfasst, insbesondere indem die Oberseite (21b) vollständig offen ist,
- der Vorratsbehälter (21) mit der Befüllöffnung (2.2a) in Verbindung steht, insbesondere der Boden (21a) des Vorratsbehälters (21) bis zur Befüllöffnung (2.2a) reicht und auf deren Höhe oder darüber endet insbesondere an diese angrenzt.

11. Ballenpresse nach Anspruch 10,
**dadurch gekennzeichnet, dass**
- der Vorratsbehälter (21) ein ausreichend großes Volumen zum Aufnehmen einer vollständigen Charge mit insbesondere vorgegebenem Volumen von, insbesondere losem, Pressgut (P) besitzt,
- das vorgegebene Volumen einer vollständigen Charge dem Volumen eines Sammelwagens (SW) für loses Pressgut (P) entspricht.

12. Ballenpresse nach Anspruch 10 oder 11,
**dadurch gekennzeichnet, dass**
- der Vorratsbehälter (21) einen Vorratsschieber (24) umfasst, der auf die Befüllöffnung (2.2a) zu und von dieser weg bewegbar ist zwischen zwei Endlagen,
- wobei in der einen Endlage der Vorratsschieber (24) die Befüllöffnung (2.2a) des Presskastens (2) verschließt und seine Frontfläche Bestandteil der Innenfläche einer der Wände (2.2 - 2.4) des Presskastens (2) ist und/oder in der einen Endlage der Vorratsschieber (24) Bestandteil derjenigen Seitenwand (2.2) ist, in der sich die Befüllöffnung (2.2a) befindet,
- insbesondere in der anderen Endlage der Vorratsschieber (24) sich an dem von der Befüllöffnung (2.2a) abgewandten Ende des Vorratsbehälters (21) befindet.

13. Ballenpresse nach Anspruch 12,
**dadurch gekennzeichnet, dass**
der Vorratsschieber (24)
- entweder im Vorratsbehälter (21) hin und her verfahrbar ist,
- oder die von der Befüllöffnung (2.2a) abgewandte Stirnwand (21.1) des Vorratsbehälters (21) der Vorratsschieber (24) ist und insbesondere die Seitenwände (21.2, 21.3) längenveränderbar, insbesondere mehrteilig, insbesondere teleskopierbar, ausgebildet sind,
und/oder
- der Schwenkarm (30), der Vorratsschieber (24), und der wenigstens eine Pressstempel (3) über getrennte Antriebe verfügen und insbesondere unabhängig voneinander betätigbar sind,
- insbesondere bei jeweils hydraulischem Antrieb hierfür getrennte und insbesondere unabhängig voneinander ansteuerbare Druck-Quellen, insbesondere Hydraulikpumpen, vorhanden sind.

14. Ballenpresse nach Anspruch 12 oder 13,
**dadurch gekennzeichnet, dass**
- der Vorratsschieber (24) mittels, vorzugsweise in seiner Bewegungsrichtung (24') verlaufenden, beidseitigen Schieberzylindern (26a, b) verfahren wird,
- die insbesondere entlang der Außenseiten des Vorratsbehälters (21) verlaufen
- und insbesondere auch entlang der Außenseiten der Längswände (2.3, 2.4) des Presskastens (2),
und/oder
- die Schieberzylinder (26a, b) als Zugzylinder ausgebildet sind.

15. Ballenpresse nach einem der Ansprüche 10 bis 14,
**dadurch gekennzeichnet, dass**
- der Vorratsbehälter (21) eine Deckelklappe (25) umfasst, die zwischen einer die Einfüllöffnung (21b1), insbesondere die offene Oberseite (21b), des Vorratsbehälters (21) verschließenden Schließstellung und einer diese nicht verschließenden, insbesondere vollständig offen lassenden, Offenstellung verlagerbar ist, insbesondere verschwenkbar ist,
- insbesondere das Volumen des Vorratsbehälters (21) in der Schließstellung der Deckelklappe (25) geringer ist als das vorgegebene Volumen einer Charge,
insbesondere in der Schließstellung die Unterseite (25b) der Deckelklappe (25) parallel zum Boden (21a) des Vorratsbehälters (21) verläuft,
und/oder
- die Deckelklappe (25) an ihrem freien, von ihrer Schwenkachse (25') abgewandten, Seite eine Kröpfung in Richtung in den Vorratsbehälter (21) hinein aufweist.

16. Ballenpresse nach Anspruch 15 oder nach einem der Ansprüche 12 bis 14, **dadurch gekennzeichnet, dass**
- die Deckelklappe (25) so ausgebildet ist, dass sie als Führungsklappe einsetzbar ist, die zwischen einer schräg zum Boden (21a) über der offenen Oberseite (21b) des Vorratsbehälters (21), stehenden Führungsstellung und einer diese weniger überlappenden Offenstellung verlagerbar ist, insbesondere verschwenkbar ist,
- in der Führungsstellung die Unterseite der Führungsklappe in Richtung Befüllöffnung (2.2a) sich dem Boden (21a) des Vorratsbehälters (21) annähert,
- insbesondere Seitenbleche (29a, b) vorhanden sind, die in der Führungsstellung den Freiraum zwischen den Seitenkanten der Führungsklappe und dem Rand der offenen Oberseite (21b) des Vorratsbehälters (21) verschließen,
und/oder
- eine von der Oberkante des Vorratsschiebers (24) sich in die von der Befüllöffnung (2.2a) wegweisende Richtung erstreckendes Abdeckelement (27) vorhanden ist, welches die in der Aufsicht betrachtete Fläche zwischen der Rückseite des Vorratsschiebers (24) und dem daran angrenzenden Teil des Vorratsbehälters (21) verschließt.

17. Ballenpresse nach einem der Ansprüche 10 bis 16,
**dadurch gekennzeichnet, dass**
entweder
- der Boden (21a) des Vorratsbehälters (21) schräg nach oben ansteigend, insbesondere als ebene Fläche, zur Befüllöffnung (2.2a), insbesondere zu deren Unterkante hin, ansteigt,
- die Vorschubrichtung (24') des Vorratsschiebers (24) parallel zum Boden (21a) des Vorratsbehälters (21) verläuft,
- die Frontseite (24a) des Vorratsschiebers (24) parallel zur Innenfläche derjenigen Seitenwand (2.2) angeordnet ist, in der sich die Befüllöffnung (2.2a) befindet,
oder
- der Vorratsbehälter (21) in der Höhe verlagerbar am Presskasten (2) befestigt ist bis zu einer oberen Position, in der die Kasten-seitige Kante des Bodens (21a) mit der Unterkante der Befüllöffnung (2.2a) fluchtet oder höher liegt.

18. **Verfahren** zum Betreiben einer Ballenpresse (1) nach einem der vorhergehenden Ansprüche 7 bis 17,
- wobei deren Presskasten (2) automatisch befüllt wird,
**dadurch gekennzeichnet, dass**
- der Presskasten (2) chargenweise automatisch befüllt wird.

19. Verfahren nach Anspruch 18,
**dadurch gekennzeichnet, dass**
das, insbesondere lose, Pressgut (P) automatisch durch die Befüllöffnung (2.2a) in den Presskasten (2) hinein gedrückt, insbesondere hinein geschoben, wird.

20. Verfahren nach einem der vorhergehenden Verfahrensansprüche,
**dadurch gekennzeichnet, dass**
- das, insbesondere lose, Pressgut (P) vor oder während dem Hineindrücken in den Presskasten (2) durch die Befüllöffnung (2.2a) in der Höhe zusammengedrückt, also vorverdichtet, wird auf eine Höhe, die gleich oder geringer ist als die Höhe der Befüllöffnung (2.2a),
und/oder
das, insbesondere lose, Pressgut (P) vor dem Hineindrücken in den Presskasten (2) durch die Befüllöffnung (2.2a),
- entweder über eine geringere in der Aufsicht betrachtete Breite verteilt angeordnet wird als die Breite der Befüllöffnung (2.2a),
- oder vor oder während dem Hineindrücken in den Presskasten (2) durch die Befüllöffnung (2.2a) in der Breite zusammengedrückt wird auf eine Breite, die geringer ist als die Breite der Befüllöffnung (2.2a).

21. Verfahren nach einem der vorhergehenden Verfahrensansprüche
**dadurch gekennzeichnet, dass**
während des Verpressens des Pressgutes (P) im Presskasten (2)
- noch ein Sammelwagen (SW) von der Hub-Kipp-Vorrichtung (22) in die Andock-Stellung zurückbewegt werden kann,
- insbesondere ein neuer, gefüllter Sammelwagen (SW) an der Hub-Kipp-Vorrichtung (22) befestigt werden kann,
und/oder
- der Vorratsbehälter (21) der Befüllvorrichtung (20) bereits wieder mit Pressgut (P) gefüllt werden kann.

22. Verfahren nach einem der vorhergehenden Verfahrensansprüche,
**dadurch gekennzeichnet, dass**
- das, insbesondere lose, Pressgut (P) vor dem Hineindrücken in den Presskasten (2) durch die Befüllöffnung (2.2a) nach oben geschoben wird bis auf die Höhe der Befüllöffnung (2.2a),
oder
- das, insbesondere lose, Pressgut (P) vor dem Hineindrücken in den Presskasten (2) durch die Befüllöffnung (2.2a) nach oben gehoben wird bis auf die Höhe der Befüllöffnung (2.2a).

## Claims

1. **Lifting and tilting device** (22) for picking up, moving and emptying a collection trolley (SW) filled with packaging materials, comprising
- a base frame (32),
- a pivot arm (30), which is attached to the base frame (32) so as to pivot about an arm axis (30'),
- an attaching device (23) for attaching the collection trolley (SW) to the pivot arm (30),
- a tilting device (33) for tilting the collection trolley (SW),
- wherein the tilting device (33) comprises a tilting part (31) attached to the pivot arm (30) so as to pivot about a tilt axis (31'),
- wherein the attaching device (23) is non-rotatably fixed to the tilting part (31),
- wherein the tilting device (33) is a sliding-block guide (33) with a guide track (34) and an element (35) guided along it,
- wherein the attaching device (23) and the collection trolley (SW) attached thereto can be brought to the height of a feed opening of a baling press (1) by swinging the pivot arm (30) upwards,
- wherein the tilting part (31) carries the guided element (35), and
- wherein the tilting part (31) and thus the collection trolley (SW) can be tilted depending on the course of the guide track (34) by swinging the pivot arm (30) upwards such that the collection trolley (SW) points downwards with its upper opening (SWo) in the parked state and thus empties due to gravity,
**characterised in that**
- the device comprises only one pivot arm (30).

2. Lifting and tilting device according to claim 1,
**characterised in that**
- the guide track (34) is a guide groove (34), and
- the guided element (35) is a sliding block (35), in particular a grooved pulley (35).

3. Lifting and tilting device according to any of the preceding claims,
**characterised in that**
the pivot arm (30) is rigid between the arm axis (30') and the tilting part (31), in particular does not comprise a joint,
and/or
- the arm axis (30') and the tilt axis (31') run parallel to each other,
- in particular lie horizontally.

4. Lifting and tilting device according to any of the preceding claims,
**characterised in that**
- the pivot arm (30) can be pivoted between an upper and a lower end stop (36a, b),
- in particular when the pivot arm (30) is in the lower end position, i.e. lying against the lower end stop (36a), it points obliquely downwards from the arm axis (30'), and when it is in the upper end position, i.e. lying against the upper end stop (36b), it points obliquely upwards.

5. Lifting and tilting device according to any of the preceding claims,
**characterised in that**
- the lifting and tilting device (22) comprises a bearing block (37) in which the pivoting arm (30) is pivotably mounted, and
- the hydraulic cylinder (38) for pivoting the pivot arm (30) is attached between the bearing block (37) and the pivot arm (30),
and/or
- the pivot drive for the pivot arm (30) is a hydraulic cylinder (38).

6. Lifting and tilting device according to any of the preceding claims,
**characterised in that**
- the lower part of the guide track (34), in particular the lower initial region of the guide track (34), is an arc of a circle around the arm axis (30')
and/or
- the curvature of the guide track (34) is greatest in its central region.

7. **Baling press** (1) for compressing in particular packaging materials into bales, comprising
- a press chamber (2) with a floor (2a) and side walls (2.1 - 2.4) projecting upwards therefrom and a removal opening,
- a press ram (3) that can be moved in the press chamber (2),
- a filling device (20) with a lifting and tilting device (22) for picking up, moving and emptying a collection trolley (SW) filled with packaging materials for automatic filling of the press chamber (2) through a filling opening (2.2a),
**characterised in that**
- the lifting and tilting device (22) is designed according to any of the preceding claims.

8. Baling press according to claim 7,
**characterised in that**
- the lifting and tilting device (22) is attached to the baling press (1),
- in particular the bearing block (37) is bolted to the baling press (1).

9. Baling press according to claim 7 or 8,
**characterised in that**
- the baling press (1) is a vertical box baling press (1),
- the press ram (3) can be moved up and down in the press chamber (2).
- the press chamber (2) has a removal opening (2.1a) that can be closed by a removal door (12),
and/or
- if only one pivot arm (30) is present, it is attached to the baling press (1) on the anti-operator side (1d) facing away from the operator side (1c),
the attaching device (23) extends from the pivot arm (30) towards the operator side (1c).

10. Baling press according to any of claims 7 to 9,
**characterised in that**
- the filling device (20) comprises a stock bin (21) for receiving loose press material (P), which comprises a feed opening (21b1), in particular in the upper region, in particular in the upper side (21b), of the stock bin (21), in particular the upper side (21b) being completely open,
- the stock bin (21) is connected to the filling opening (2.2a), in particular the floor (21a) of the stock bin (21) extends as far as the filling opening (2.2a) and ends at its height or above it, in particular adjoins it.

11. Baling press according to claim 10,
**characterised in that**
- the stock bin (21) has a sufficiently large volume to hold a complete batch with, in particular, a specified volume of, in particular, loose, press material (P),
- the specified volume of a complete batch corresponds to the volume of a collection trolley (SW) for loose press material (P).

12. Baling press according to claim 10 or 11,
**characterised in that**
- the stock bin (21) comprises a stock slide (24) which can be moved to and from the filling opening (2.2a) between two end positions,
- wherein, in one end position, the stock slide (24) closes the filling opening (2.2a) of the press chamber (2) and its front face is a component of the inner surface of one of the walls (2.2 - 2.4) of the press chamber (2) and/or, in one end position, the stock slide (24) is a component of that side wall (2.2) in which the filling opening (2.2a) is located,
- in particular, in the other end position, the stock slide (24) is located at the end of the stock bin (21) facing away from the filling opening (2.2a).

13. Baling press according to claim 12,
**characterised in that**
the stock slide (24)
- either can be moved back and forth in the stock bin (21),
- or the end wall (21.1) of the stock bin (21) facing away from the filling opening (2.2a) is the stock slide (24) and, in particular, the side walls (21.2, 21.3) are of variable length, in particular comprise a plurality of parts, in particular are telescopically designed,
and/or
- the pivot arm (30), the stock slide (24) and the at least one press ram (3) have separate drives and, in particular, can be actuated independently of one another,
- especially in the case of hydraulic drives, separate and, in particular, independently controllable pressure sources, especially hydraulic pumps, are provided for this purpose.

14. Baling press according to claim 12 or 13,
**characterised in that**
- the stock slide (24) is moved by means of slide cylinders (26a, b) on both sides, preferably extending in its direction of movement (24'),
- which run in particular along the outer sides of the stock bin (21)
- and in particular also along the outer sides of the longitudinal walls (2.3, 2.4) of the press chamber (2),
and/or
- the slide cylinders (26a, b) are designed as draw-cylinders.

15. Baling press according to any of claims 10 to 14,
**characterised in that**
- the stock bin (21) comprises a cover flap (25) which is movable, in particular pivotable, between a closed position closing the feed opening (21b1), in particular the open upper side (21b), of the stock bin (21), and an open position not closing it, in particular leaving it completely open,
- in particular, the volume of the stock bin (21) with the cover flap (25) in the closed position is less than the specified volume of a batch,
in particular in the closed position, the underside (25b) of the cover flap (25) runs parallel to the floor (21a) of the stock bin (21),
and/or
- the cover flap (25) has an offset on its free side facing away from its pivot axis (25') towards the interior of the stock bin (21).

16. Baling press according to claim 15 or according to any of claims 12 to 14, **characterised in that**
- the cover flap (25) is designed such that it can be used as a guide flap, which can be moved, in particular pivoted, between a guide position standing at an angle to the floor (21a) above the open upper side (21b) of the stock bin (21) and an open position overlapping this to a lesser extent,
- in the guide position, the underside of the guide flap approaches the floor (21a) of the stock bin (21) in the direction of the filling opening (2.2a),
- in particular side plates (29a, b) are present which, in the guide position, close the free space between the side edges of the guide flap and the edge of the open upper side (21b) of the stock bin (21),
and/or
- a cover element (27) extending from the upper edge of the stock slide (24) in the direction pointing away from the filling opening (2.2a) is provided, which closes the area between the rear side of the stock slide (24) and the part of the stock bin (21) adjacent thereto as viewed from above.

17. Baling press according to any of claims 10 to 16,
**characterised in that**
either
- the floor (21a) of the stock bin (21) rises obliquely upwards, in particular as a flat surface, towards the filling opening (2.2a), in particular towards the lower edge thereof,
- the feed direction (24') of the stock slide (24) runs parallel to the floor (21a) of the stock bin (21),
- the front side (24a) of the stock slide (24) is arranged parallel to the inner surface of that side wall (2.2) in which the filling opening (2.2a) is located,
or
- the stock bin (21) is attached to the press chamber (2) so that it can be raised to an upper position in which the edge of the floor (21a) on the chamber side is flush with or higher than the lower edge of the filling opening (2.2a).

18. **Method** for operating a baling press (1) according to any of the preceding claims 7 to 17,
- wherein its press chamber (2) is filled automatically,
**characterised in that**
- the press chamber (2) is filled automatically in batches.

19. Method according to claim 18,
**characterised in that**
the, in particular loose, press material (P) is automatically pressed, in particular pushed, through the filling opening (2.2a) into the press chamber (2).

20. Method according to any of the preceding method claims,
**characterised in that**
- the, in particular loose, press material (P) is compressed in height, i.e. precompacted, before or during pressing into the press chamber (2) through the filling opening (2.2a), to a height that is equal to or less than the height of the filling opening (2.2a),
and/or
before it is pressed into the press chamber (2) through the filling opening (2.2a) the, in particular loose, press material (P)
- is either distributed over a smaller width, as viewed from above, than the width of the filling opening (2.2a),
- or is compressed before or during pressing into the press chamber (2) through the filling opening (2.2a) to a width that is equal to or less than the width of the filling opening (2.2a).

21. Method according to any of the preceding method claims,
**characterised in that**
during the pressing of the press material (P) in the press chamber (2)
- a collection trolley (SW) can be moved back from the lifting and tilting device (22) into the docking position,
- in particular a new, filled collection trolley (SW) can be attached to the lifting and tilting device (22),
and/or
- the stock bin (21) of the filling device (20) can already be filled again with press material (P).

22. Method according to any of the preceding method claims,
**characterised in that**
- the, in particular loose, press material (P) is pushed upwards to the height of the filling opening (2.2a) before being pressed into the press chamber (2) through the filling opening (2.2a),
or
- the, in particular loose, press material (P) is lifted upwards to the height of the filling opening (2.2a) before being pressed into the press chamber (2) through the filling opening (2.2a).

## Revendications

1. Dispositif de levage et de basculement (22) pour recevoir, déplacer et vider un chariot de collecte (SW) rempli de matériaux d'emballage, comprenant
- un châssis de base (32),
- un bras pivotant (30) fixé au châssis de base (32) de manière à pouvoir pivoter autour d'un axe de bras (30'),
- un dispositif de fixation (23) pour fixer le chariot de collecte (SW) au bras pivotant (30),
- un dispositif de basculement (33) pour faire basculer le chariot de collecte (SW),
dans lequel
- le dispositif de basculement (33) comprend une partie basculante (31) fixée au bras pivotant (30) de manière à pouvoir pivoter autour d'un axe de basculement (31'),
- le dispositif de fixation (23) est fixé solidairement en rotation à la partie basculante (31),
- le dispositif de basculement (33) est un guidage à coulisse (33) présentant une voie de guidage (34) et un élément (35) guidé le long de celle-ci,
- le pivotement vers le haut du bras pivotant (30) permet d'amener le dispositif de fixation (23) et le chariot de collecte (SW), fixé à celui-ci, jusqu'au niveau d'une ouverture de remplissage d'une presse à balles (1),
- la pièce basculante (31) porte l'élément guidé (35), et
- le pivotement vers le haut du bras pivotant (30) en fonction du tracé de la voie de guidage (34) permet de faire basculer la partie basculante (31) et donc le chariot de collecte (SW) de telle sorte que le chariot de collecte (SW) soit orienté vers le bas avec son ouverture (SWo), supérieure à l'état stationné, et se vide ainsi par gravité,
**caractérisé en ce que**
- le dispositif ne comprend qu'un seul bras pivotant (30).

2. Dispositif de levage et de basculement selon la revendication 1, **caractérisé en ce que**
- la voie de guidage (34) est une rainure de guidage (34), et
- l'élément guidé (35) est un coulisseau (35), en particulier un galet (35).

3. Dispositif de levage et de basculement selon l'une des revendications précédentes,
**caractérisé en ce que**
le bras pivotant (30) est rigide entre l'axe de bras (30') et la partie basculante (31), en particulier ne comprend pas d'articulation,
et/ou
- l'axe de bras (30') et l'axe de basculement (31') sont parallèles entre eux,
- en particulier sont situés horizontalement.

4. Dispositif de levage et de basculement selon l'une des revendications précédentes,
**caractérisé en ce que**
- le bras pivotant (30) peut pivoter entre des butées de fin de course supérieure et inférieure (36a, b),
- en particulier, le bras pivotant (30) est orienté en oblique vers le bas depuis l'axe de bras (30') dans la position de fin de course inférieure, c'est-à-dire en appui contre la butée de fin de course inférieure (36a), et est orienté en oblique vers le haut dans la position de fin de course supérieure, c'est-à-dire en appui contre la butée de fin de course supérieure (36b).

5. Dispositif de levage et de basculement selon l'une des revendications précédentes,
**caractérisé en ce que**
- le dispositif de levage et de basculement (22) comprend un support de palier (37) dans lequel le bras pivotant (30) est monté pivotant, et
- le vérin hydraulique (38) destiné à faire pivoter le bras pivotant (30) est fixé entre le support de palier (37) et le bras pivotant (30),
et/ou
- l'entraînement de pivotement pour le bras pivotant (30) est un vérin hydraulique (38).

6. Dispositif de levage et de basculement selon l'une des revendications précédentes,
**caractérisé en ce que**
- la partie inférieure de la voie de guidage (34), en particulier la zone initiale inférieure de la voie de guidage (34), est un arc de cercle autour de l'axe de bras (30'),
et/ou
- la courbure de la voie de guidage (34) est la plus forte dans sa partie centrale.

7. Presse à balles (1) destinée à comprimer en particulier des matériaux d'emballage pour donner des balles, comprenant
- un caisson de compression (2) présentant un fond (2a) et des parois latérales (2.1 - 2.4), s'élevant depuis celui-ci, ainsi qu'une ouverture de prélèvement,
- un poinçon de compression (3) mobile dans le caisson de compression (2),
- un dispositif de remplissage (20) présentant un dispositif de levage et de basculement (22) pour recevoir, déplacer et vider un chariot de collecte (SW) rempli de matériaux d'emballage pour remplir automatiquement le caisson de compression (2) à travers une ouverture de remplissage (2.2a), **caractérisée en ce que**
- le dispositif de levage et de basculement (22) est réalisé selon l'une des revendications précédentes.

8. Presse à balles selon la revendication 7,
**caractérisée en ce que**
- le dispositif de levage et de basculement (22) est fixé à la presse à balles (1),
- en particulier, le support de palier (37) est vissé sur la presse à balles (1).

9. Presse à balles selon la revendication 7 ou 8,
**caractérisée en ce que**
- la presse à balles (1) est une presse à balles à caisson vertical (1),
- le poinçon de compression (3) est mobile vers le haut et vers le bas dans le caisson de compression (2),
- le caisson de compression (2) présente une ouverture de prélèvement (2.1a) pouvant être fermée par une porte de prélèvement (12),
et/ou
- lorsqu'il n'y a qu'un seul bras pivotant (30), celui-ci est fixé à la presse à balles (1) sur le côté anti-opérateur (1d) détourné du côté opérateur (1c),
- le dispositif de fixation (23) fait saillie du bras pivotant (30) en direction du côté opérateur (1c).

10. Presse à balles selon l'une des revendications 7 à 9,
**caractérisée en ce que**
- le dispositif de remplissage (20) comprend un réservoir (21) destiné à recevoir des matériaux à presser en vrac (P), qui présente une ouverture de remplissage (21 b1), en particulier dans la zone supérieure, en particulier dans la face supérieure (21b), du réservoir (21), en particulier la face supérieure (21b) étant entièrement ouverte,
- le réservoir (21) communique avec l'ouverture de remplissage (2.2a), en particulier le fond (21a) du réservoir (21) s'étend jusqu'à l'ouverture de remplissage (2.2a) et se termine à son niveau ou au-dessus, en particulier de manière adjacente à celle-ci.

11. Presse à balles selon la revendication 10,
**caractérisée en ce que**
- le réservoir (21) possède un volume suffisamment grand pour contenir un lot complet, ayant en particulier un volume prédéfini, de matériaux à presser (P), en particulier en vrac,
- le volume prédéfini d'un lot complet correspond au volume d'un chariot de collecte (SW) pour les matériaux à presser (P) en vrac.

12. Presse à balles selon la revendication 10 ou 11,
**caractérisée en ce que**
- le réservoir (21) comprend un poussoir d'alimentation (24) qui peut être déplacé vers l'ouverture de remplissage (2.2a) et en éloignement de celle-ci entre deux positions de fin de course,
- dans l'une des positions de fin de course, le poussoir d'alimentation (24) ferme l'ouverture de remplissage (2.2a) du caisson de compression (2) et sa surface frontale fait partie de la surface intérieure de l'une des parois (2.2 - 2.4) du caisson de compression (2) et/ou dans l'une des positions de fin de course, le poussoir d'alimentation (24) fait partie de la paroi latérale (2.2) dans laquelle se trouve l'ouverture de remplissage (2.2a),
- en particulier, dans l'autre position de fin de course, le poussoir d'alimentation (24) se trouve à l'extrémité du réservoir (21) détournée de l'ouverture de remplissage (2.2a).

13. Presse à balles selon la revendication 12,
**caractérisée en ce que**
le poussoir d'alimentation (24)
- soit est mobile en va-et-vient dans le réservoir (21),
- soit la paroi frontale (21.1) du réservoir (21) détournée de l'ouverture de remplissage (2.2a) constitue le poussoir d'alimentation (24), et en particulier les parois latérales (21.2, 21.3) sont de longueur variable, en particulier en plusieurs parties, en particulier télescopiques,
et/ou
- le bras pivotant (30), le poussoir d'alimentation (24) et ledit au moins un poinçon de compression (3) disposent d'entraînements séparés et peuvent en particulier être actionnés indépendamment les uns des autres,
- en particulier, dans le cas d'un entraînement hydraulique respectif, il existe à cet effet des sources de pression séparées et en particulier aptes à être commandées indépendamment les unes des autres, en particulier des pompes hydrauliques.

14. Presse à balles selon la revendication 12 ou 13,
**caractérisée en ce que**
- le poussoir d'alimentation (24) est déplacé au moyen de vérins de poussoir (26a, b), situés de part et d'autre et s'étendant de préférence dans sa direction de déplacement (24'),
- qui s'étendent en particulier le long des faces extérieures du réservoir (21),
- et en particulier également le long des faces extérieures des parois longitudinales (2.3, 2.4) du caisson de compression (2),
et/ou
- les vérins de poussoir (26a, b) sont conçus comme des vérins de traction.

15. Presse à balles selon l'une des revendications 10 à 14,
**caractérisée en ce que**
- le réservoir (21) comprend un volet de couvercle (25) qui peut être déplacé, en particulier pivoté, entre une position de fermeture fermant l'ouverture de remplissage (21b1), en particulier la face supérieure ouverte (21b), du réservoir (21), et une position ouverte ne fermant pas cette ouverture, en particulier la laissant complètement ouverte,
- en particulier, le volume du réservoir (21) dans la position de fermeture du volet de couvercle (25) est inférieur au volume prédéfini d'un lot,
en particulier, dans la position de fermeture, la face inférieure (25b) du volet de couvercle (25) s'étend parallèlement au fond (21a) du réservoir (21),
et/ou
- le volet de couvercle (25) présente sur son côté libre, détourné de son axe de pivotement (25'), un coude en direction de l'intérieur du réservoir (21).

16. Presse à balles selon la revendication 15 ou l'une des revendications 12 à 14,
**caractérisée en ce que**
- le volet de couvercle (25) est conçu de manière à pouvoir être utilisé comme un volet de guidage qui peut être déplacé, en particulier pivoté, entre une position de guidage en oblique par rapport au fond (21a) au-dessus de la face supérieure ouverte (21b) du réservoir (21) et une position ouverte qui la recouvre moins,
- dans la position de guidage, la face inférieure du volet de guidage se rapproche du fond (21a) du réservoir (21) en direction de l'ouverture de remplissage (2.2a),
- en particulier, il existe des tôles latérales (29a, b) qui, dans la position de guidage, ferment l'espace libre entre les bords latéraux du volet de guidage et le bord de la face supérieure ouverte (21b) du réservoir (21),
et/ou
- il existe un élément de recouvrement (27) qui s'étend depuis le bord supérieur du poussoir d'alimentation (24) dans la direction orientée en éloignement de l'ouverture de remplissage (2.2a) et qui ferme la surface, observée en vue de dessus, entre la face arrière du poussoir d'alimentation (24) et la partie du réservoir (21) qui lui est adjacente.

17. Presse à balles selon l'une des revendications 10 à 16,
**caractérisée en ce que**
soit
- le fond (21a) du réservoir (21) monte en oblique vers le haut, en particulier sous forme de surface plane, en direction de l'ouverture de remplissage (2.2a), en particulier vers son bord inférieur,
- la direction d'avance (24') du poussoir d'alimentation (24) est parallèle au fond (21a) du réservoir (21),
- la face frontale (24a) du poussoir d'alimentation (24) est disposée parallèlement à la surface intérieure de la paroi latérale (2.2) dans laquelle se trouve l'ouverture de remplissage (2.2a),
soit
- le réservoir (21) est fixé au caisson de compression (2) de manière à pouvoir être déplacé en hauteur jusqu'à une position supérieure dans laquelle le bord du fond (21a) côté caisson est aligné avec le bord inférieur de l'ouverture de remplissage (2.2a) ou est plus haut.

18. Procédé de fonctionnement d'une presse à balles (1) selon l'une des revendications précédentes 7 à 17,
- dans lequel le caisson de compression (2) de celle-ci est rempli automatiquement,
**caractérisé en ce que**
- le caisson de compression (2) est remplie automatiquement par lots.

19. Procédé selon la revendication 18,
**caractérisé en ce que**
les matériaux à presser (P), en particulier en vrac, sont automatiquement enfoncés, en particulier poussés, dans le caisson de compression (2) à travers l'ouverture de remplissage (2.2a).

20. Procédé selon l'une des revendications de procédé précédentes, **caractérisé en ce que**
- avant ou pendant l'enfoncement dans le caisson de compression (2) à travers l'ouverture de remplissage (2.2a), les matériaux à presser (P), en particulier en vrac, sont comprimés en hauteur, c'est-à-dire pré-compactés, jusqu'à une hauteur égale ou inférieure à la hauteur de l'ouverture de remplissage (2.2a),
et/ou
avant d'être enfoncés dans le caisson de compression (2) par l'ouverture de remplissage (2.2a), les matériaux à presser (P), en particulier en vrac,
- soit sont répartis sur une largeur qui, vue en plan, est inférieure à la largeur de l'ouverture de remplissage (2.2a),
- soit sont comprimés en largeur, avant ou pendant l'enfoncement dans le caisson de compression (2) à travers l'ouverture de remplissage (2.2a), jusqu'à une largeur inférieure à la largeur de l'ouverture de remplissage (2.2a).

21. Procédé selon l'une des revendications de procédé précédentes, **caractérisé en ce que**
pendant le pressage des matériaux à presser (P) dans le caisson de compression (2)
- un chariot de collecte (SW) peut encore être ramené dans la position d'accostage par le dispositif de levage et de basculement (22),
- en particulier un nouveau chariot de collecte (SW) rempli peut être fixé au dispositif de levage et de basculement (22),
et/ou
- le réservoir (21) du dispositif de remplissage (20) peut déjà être à nouveau rempli de matériaux à presser (P).

22. Procédé selon l'une des revendications de procédé précédentes, **caractérisé en ce que**
- avant d'être enfoncés dans le caisson de compression (2) à travers l'ouverture de remplissage (2.2a), les matériaux à presser (P), en particulier en vrac, sont poussés vers le haut jusqu'au niveau de l'ouverture de remplissage (2.2a),
ou
- avant d'être enfoncés dans le caisson de compression (2) à travers l'ouverture de remplissage (2.2a), les matériau à presser (P), en particulier en vrac, sont poussés vers le haut jusqu'au niveau de l'ouverture de remplissage (2.2a).
